# EUROPEAN PATENT APPLICATION

(11) **EP 4 411 961 A1**
(43) Date of publication of application: **07.08.2024**
(21) Application number: 22875861.1
(22) Date of filing: 15.09.2022
(51) Int. Cl.: H01M 50/403, H01M 4/04, H01M 50/414, H01M 50/42, H01M 50/434, H01M 50/443, H01M 50/446, H01M 50/451, H01M 50/46

(54) **POWER STORAGE DEVICE SEPARATOR BINDER AQUEOUS SOLUTION, POWER STORAGE DEVICE SEPARATOR SLURRY, POWER STORAGE DEVICE SEPARATOR, POWER STORAGE DEVICE SEPARATOR/ELECTRODE LAMINATE, AND POWER STORAGE DEVICE**

(30) Priority: 29.09.2021 JP 2021159978; 29.09.2021 JP 2021159977
(71) Applicant: Arakawa Chemical Industries, Ltd., Osaka-shi Osaka 541-0046 (JP)
(72) Inventor: OKUBO, Katsuya, Tsukuba-shi, Ibaraki 300-2611 (JP); SASAGAWA, Naoki, Tsukuba-shi, Ibaraki 300-2611 (JP); AOYAMA, Satoru, Tsukuba-shi, Ibaraki 300-2611 (JP); OGAWA, Yuji, Tsukuba-shi, Ibaraki 300-2611 (JP)
(74) Representative: Becker, Eberhard
(86) International application number: PCT/JP2022/034571
(87) International publication number: WO 2023/053990

(57) **Abstract**

There is provided a power storage device separator binder aqueous solution, where the power storage device separator binder aqueous solution contains a water soluble polymer (1) or contains a water soluble polymer (2) and a hydrazide. The water soluble polymer (1) contains 20% by mole to 80% by mole of an N,N-dialkyl (meth)acrylamide unit and 10% by mole to 80% by mole of a (meth)acrylamide unit. The water soluble polymer (2) contains 0.2% by mole to 10% by mole of a keto group-containing ethylenically unsaturated monomer unit and 65% by mole to 99.7% by mole of a (meth)acrylamide group-containing compound unit. The hydrazide has two or more hydrazide groups.

## Description

### [Technical Field]

The present disclosure relates to a power storage device separator binder aqueous solution, a power storage device separator slurry, a power storage device separator, a power storage device separator/electrode laminate, and a power storage device.

### [Background Art]

In a separator of a power storage device, a binder is used to maintain adhesion between a coating layer (heat-resistant layer) and a base material.

A power storage device separator slurry includes a binder and a solvent. The applicant has studied a method that uses a water soluble poly(meth)acrylamide as a binder (Patent Document 1).

### [Citation List]

### [Patent Literature]

### [Citation List]

### [Patent Document]

[Patent Document 1]
Japanese Patent Laid-Open No. 2018-026266

### [Summary of Invention]

### [Technical Problem]

An objective to be achieved by the present invention (1) is to provide a power storage device separator binder aqueous solution that can impart favorable binding properties of non-conductive particles, favorable adherence, favorable rate tolerance, and favorable output characteristics.

An objective to be achieved by the present invention (2) is to provide a power storage device separator binder aqueous solution that can impart favorable thermal shrinkage resistance, favorable binding properties of non-conductive particles, favorable adherence, favorable rate tolerance, and favorable output characteristics.

### [Solution to Problem]

The inventors of the present invention found that the above objectives can be achieved by using specific components.

The present disclosure provides the following items.

### (Item 1)

A power storage device separator binder aqueous solution,
in which the power storage device separator binder aqueous solution contains a water soluble polymer (1) or contains a water soluble polymer (2) and a hydrazide,
the water soluble polymer (1) contains 20% by mole to 80% by mole of an N,N-dialkyl (meth)acrylamide unit and 10% by mole to 80% by mole of a (meth)acrylamide unit,
the water soluble polymer (2) contains 0.2% by mole to 10% by mole of a keto group-containing ethylenically unsaturated monomer unit and 65% by mole to 99.7% by mole of a (meth)acrylamide group-containing compound unit, and
the hydrazide has two or more hydrazide groups.

### (Item 2)

The power storage device separator binder aqueous solution according to the above-described item, in which the water soluble polymer (1) contains less than 40% by mole of an unsaturated carboxylic acid unit and/or a unit of a salt of the unsaturated carboxylic acid.

### (Item 3)

The power storage device separator binder aqueous solution according to the above-described item, in which the water soluble polymer (2) contains less than 30% by mole of an unsaturated carboxylic acid unit and/or a unit of a salt of the unsaturated carboxylic acid.

### (Item 4)

A power storage device separator slurry,
in which the power storage device separator slurry contains a water soluble polymer (1), water, and non-conductive particles, or contains a water soluble polymer (2), a hydrazide, water, and non-conductive particles,
the water soluble polymer (1) contains 20% by mole to 80% by mole of an N,N-dialkyl (meth)acrylamide unit and 10% by mole to 80% by mole of a (meth)acrylamide unit,
the water soluble polymer (2) contains 0.2% by mole to 10% by mole of a keto group-containing ethylenically unsaturated monomer unit and 65% by mole to 99.7% by mole of a (meth)acrylamide group-containing compound unit, and
the hydrazide has two or more hydrazide groups.

### (Item 5)

A power storage device separator including:
a dried product of the power storage device separator slurry according to the above-described item, on a base material.

### (Item 6)

A power storage device separator/electrode laminate including:
a dried product of the power storage device separator slurry according to the above-described item, on an active material side of an electrode.

### (Item 7)

A power storage device including:
the power storage device separator according to the above-described item; and/or
the power storage device separator/electrode laminate according to the above-described item.

In the present disclosure, one or more of the features described above may be provided by being further combined in addition to the specified combination.

### [Advantageous Effects of Invention]

The power storage device separator binder aqueous solution according to the present embodiment (1) can impart favorable binding properties of non-conductive particles, favorable adherence, favorable rate tolerance, and favorable output characteristics.

The power storage device separator binder aqueous solution according to the present embodiment (2) can impart favorable thermal shrinkage resistance, favorable binding properties of non-conductive particles, favorable adherence, favorable rate tolerance, and favorable output characteristics.

### [Description of Embodiments]

Throughout the present disclosure, ranges of numerical values for each physical property value, content, and the like may be set as appropriate (for example, by selecting a numerical range from the values described in each item below). Specifically, in a case where A3, A2, A1 (A3 > A2 > A1) are described as a numerical value α, examples of the range of the numerical value α include A3 or less, A2 or less, less than A3, less than A2, A1 or more, A2 or more, larger than A1, larger than A2, A1 to A2 (A1 or more and A2 or less), A1 to A3, A2 to A3, A1 or more and less than A3, A1 or more and less than A2, A2 or more and less than A3, larger than A1 and less than A3, larger than A1 and less than A2, larger than A2 and less than A3, larger than A1 and A3 or less, larger than A1 and less A2 or less, and larger than A2 and A3 or less.

In the present disclosure, each component, condition, numerical value, and the like are not limited to those specifically exemplified in the specification. As long as the objective to be achieved by the present invention is achieved, each component, condition, numerical value, and the like are not limited.

"α% of β amount (A/B)" means a β amount (α%) of A with respect to 100α of B. Examples of the α include % by mass, % by mole, or parts by mass. Examples of the β amount include content and using amount.

"γ ratio (A/B)" means a γ ratio that is calculated according to the expression "A/B". Examples of the γ ratio include mass ratio and molar ratio.

"(Meth)acrylic" means "at least one selected from the group consisting of acrylic and methacrylic". "(Meth)acrylate" means "at least one selected from the group consisting of acrylate and methacrylate". "(Meth)acryloyl" means "at least one selected from the group consisting of acryloyl and methacryloyl".

Examples of the alkyl group include a linear alkyl group, a branched alkyl group, and a cycloalkyl group.

Examples of the linear alkyl group include a methyl group, an ethyl group, an n-propyl group, an n-butyl group, an n-pentyl group, an n-hexyl group, an n-heptyl group, an n-octyl group, an n-nonyl group, and an n-decamethyl group.

"Branched alkyl group" means a group having no cyclic structure, in which at least one hydrogen atom of a linear alkyl group is substituted with an alkyl group.

Examples of the branched alkyl group include an i-propyl group, a diethylpentyl group, a trimethylbutyl group, a trimethylpentyl group, and a trimethylhexyl group.

Examples of the cycloalkyl group include a monocyclic cycloalkyl group, a bridged cyclic cycloalkyl group, and a condensed cyclic cycloalkyl group. Here, a group in which at least one hydrogen atom of a cycloalkyl group is substituted with an alkyl group is also defined as the cycloalkyl group.

In the present disclosure, "monocyclic ring" means a cyclic structure formed by covalent bonding of carbon atoms, which has no internal bridged structure. "Condensed ring" means a cyclic structure in which two or more monocyclic rings share two atoms (that is, the respective rings (are condensed to) share only one side with each other). "Bridged ring" means a cyclic structure in which two or more monocyclic rings share three or more atoms.

Examples of the monocyclic cycloalkyl group include a cyclopentyl group, a cyclohexyl group, a cycloheptyl group, a cyclodecyl group, and a 3,5,5-trimethylcyclohexyl group.

Examples of the bridged cyclic cycloalkyl group include a tricyclodecyl group, an adamantyl group, and a norbornyl group.

### [Power storage device separator binder aqueous solution: aqueous solution]

The present disclosure relates to a power storage device separator binder aqueous solution,
in which the power storage device separator binder aqueous solution contains a water soluble polymer (1) or contains a water soluble polymer (2) and a hydrazide,
the water soluble polymer (1) contains 20% by mole to 80% by mole of an N,N-dialkyl (meth)acrylamide unit and 10% by mole to 80% by mole of a (meth)acrylamide unit,
the water soluble polymer (2) contains 0.2% by mole to 10% by mole of a keto group-containing ethylenically unsaturated monomer unit and 65% by mole to 99.7% by mole of a (meth)acrylamide group-containing compound unit, and
the hydrazide has two or more hydrazide groups.

In the present disclosure, "water soluble polymer" means a concept that includes the water soluble polymer (1) and the water soluble polymer (2).

### <Water soluble polymer>

One kind of water soluble polymer may be used alone, or two or more kinds thereof may be used in combination.

In the present disclosure, "water soluble" means that in a case where 5 g of a compound is dissolved in 100 g of water at 25°C, the insoluble content thereof is less than 0.5% by mass (less than 2.5 mg).

In a case where a polymer is not water soluble, the polymer is not dissolved in water. Therefore, a solution of the polymer does not become an aqueous solution. As a result, the polymer does not contribute to slurry dispersion. In addition, it is not possible to impart, to a slurry, a viscosity required for the polymer to be applied.

In a case where 0.5 g of a polymer is dissolved in 100 g of water, the insoluble content (of the water soluble polymer) is, for example, less than 0.5% by mass, less than 0.4% by mass, less than 0.3% by mass, less than 0.2% by mass, less than 0.1% by mass, or 0% by mass.

### ((Meth)acrylamide group-containing compound)

One kind of (meth)acrylamide group-containing compound may be used alone, or two or more kinds thereof may be used in combination.

In one embodiment, the (meth)acrylamide group-containing compound is represented by the following formula.

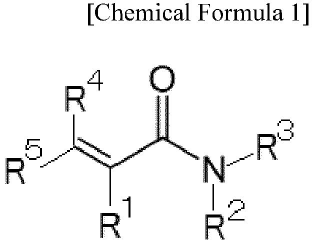

(In the formula, R¹ represents a hydrogen atom or a methyl group.

R² and R³ each independently represent a hydrogen atom, a substituted or unsubstituted alkyl group, or an acetyl group, or R² and R³ together form a ring structure.

R⁴ and R⁵ each independently represent a hydrogen atom, a substituted or unsubstituted alkyl group, a hydroxy group, a substituted or unsubstituted amino group, or an acetyl group.)

Examples of the substituent include a hydroxy group, an amino group, and an acetyl group.

Examples of the ring structure include a morpholinyl group.

Examples of the (meth)acrylamide group-containing compound include (meth)acrylamide, N,N-dialkyl (meth)acrylamide, N-isopropyl (meth)acrylamide, N,N-dimethylaminopropyl (meth)acrylamide, N-methylol (meth)acrylamide, maleic acid amide, (meth)acryloyl morpholine, and hydroxyethyl (meth)acrylamide.

### (N,N-dialkyl (meth)acrylamide)

One kind of N,N-dialkyl (meth)acrylamide may be used alone, or two or more kinds thereof may be used in combination.

Examples of the N,N-dialkyl (meth)acrylamide include N,N-dimethyl (meth)acrylamide, N,N-diethyl (meth)acrylamide, N,N-dipropyl (meth)acrylamide, and N,N-dibutyl (meth)acrylamide.

A content in terms of % by mole (N,N-dialkyl (meth)acrylamide unit/water soluble polymer (1)) is, for example, 80% by mole, 75% by mole, 70% by mole, 65% by mole, 60% by mole, 55% by mole, 50% by mole, 45% by mole, 40% by mole, 35% by mole, 30% by mole, 25% by mole, or 20% by mole. In one embodiment, the above content is preferably 20% by mole to 80% by mole.

A content in terms of % by mass (N,N-dialkyl (meth)acrylamide unit/water soluble polymer (1)) is, for example, 80% by mass, 75% by mass, 70% by mass, 65% by mass, 60% by mass, 55% by mass, 50% by mass, 45% by mass, 40% by mass, 35% by mass, 30% by mass, 25% by mass, or 20% by mass. In one embodiment, the above content is preferably 20% by mass to 80% by mass.

### ((Meth)acrylamide)

It may be acrylamide alone, methacrylamide alone, or a combination of acrylamide and methacrylamide.

A content in terms of % by mole ((meth)acrylamide unit/water soluble polymer (1)) is, for example, 80% by mole, 75% by mole, 70% by mole, 69.9% by mole, 65% by mole, 60% by mole, 55% by mole, 50% by mole, 45% by mole, 40% by mole, 39.9% by mole, 35% by mole, 30% by mole, 25% by mole, 24.9% by mole, 20% by mole, 15% by mole, 14.9% by mole, or 10% by mole. In one embodiment, the above content is preferably 10% by mole to 80% by mole.

A content in terms of % by mass ((meth)acrylamide unit/water soluble polymer (1)) is, for example, 80% by mass, 75% by mass, 70% by mass, 69.9% by mass, 65% by mass, 60% by mass, 55% by mass, 50% by mass, 45% by mass, 40% by mass, 39.9% by mass, 35% by mass, 30% by mass, 25% by mass, 24.9% by mass, 20% by mass, 15% by mass, 14.9% by mass, or 10% by mass. In one embodiment, the above content is preferably 10% by mass to 80% by mass.

A content in terms of % by mole ((meth)acrylamide group-containing compound unit/water soluble polymer (2)) is, for example, 99.7% by mole, 99.6% by mole, 99.5% by mole, 99.4% by mole, 99.3% by mole, 99.2% by mole, 99.1% by mole, 99% by mole, 95% by mole, 90% by mole, 85% by mole, 80% by mole, 75% by mole, 70% by mole, or 65% by mole. In one embodiment, the above content is preferably 65% by mole to 99.7% by mole, and more preferably 70% by mole to 99.7% by mole.

A content in terms of % by mass ((meth)acrylamide group-containing compound unit/water soluble polymer (2)) is, for example, 99.7% by mass, 99.6% by mass, 99.5% by mass, 99.4% by mass, 99.3% by mass, 99.2% by mass, 99.1% by mass, 99% by mass, 95% by mass, 90% by mass, 85% by mass, 80% by mass, 75% by mass, or 70% by mass. In one embodiment, the above content is preferably 70% by mass to 99.7% by mass.

### (Keto group-containing ethylenically unsaturated monomer)

One kind of keto group-containing ethylenically unsaturated monomer may be used alone, or two or more kinds thereof may be used in combination.

Examples of the keto group-containing ethylenically unsaturated monomer include diacetone (meth)acrylamide, acrolein, N-vinylformamide, vinyl methyl ketone, vinyl ethyl ketone, acetoacetoxyethyl (meth)acrylate, acetoacetoxypropyl (meth)acrylate, and acetoacetoxybutyl (meth)acrylate.

A content in terms of % by mole (keto group-containing ethylenically unsaturated monomer unit/water soluble polymer (2)) is, for example, 10% by mole, 9.9% by mole, 9.7% by mole, 9.5% by mole, 9.3% by mole, 9.1% by mole, 9% by mole, 8% by mole, 7% by mole, 6% by mole, 5% by mole, 4% by mole, 3% by mole, 2% by mole, 1.9% by mole, 1.7% by mole, 1.5% by mole, 1.4% by mole, 1.1% by mole, 1% by mole, 0.9% by mole, 0.7% by mole, 0.5% by mole, 0.3% by mole, 0.25% by mole, or 0.2% by mole. In one embodiment, the above content is preferably 0.2% by mole to 10% by mole.

A content in terms of % by mass (keto group-containing ethylenically unsaturated monomer unit/water soluble polymer (2)) is, for example, 10% by mass, 9.9% by mass, 9.7% by mass, 9.5% by mass, 9.3% by mass, 9.1% by mass, 9% by mass, 8% by mass, 7% by mass, 6% by mass, 5% by mass, 4% by mass, 3% by mass, 2% by mass, 1.9% by mass, 1.7% by mass, 1.5% by mass, 1.4% by mass, 1.1% by mass, 1% by mass, 0.9% by mass, 0.7% by mass, 0.5% by mass, 0.3% by mass, 0.25% by mass, or 0.2% by mass. In one embodiment, the above content is preferably 0.2% by mass to 10% by mass.

### (Unsaturated carboxylic acid and/or salt thereof)

In one embodiment, the water soluble polymer optionally contains a constitutional unit derived from an unsaturated carboxylic acid and/or a salt thereof.

One kind of the unsaturated carboxylic acid and/or salt thereof may be used alone, or two or more kinds thereof may be used in combination.

Examples of the unsaturated carboxylic acid include (meth)acrylic acid, crotonic acid, maleic acid, fumaric acid, and itaconic acid.

Examples of the salt of the unsaturated carboxylic acid include an inorganic salt of the unsaturated carboxylic acid and an organic salt of the unsaturated carboxylic acid.

Examples of the inorganic salt of the unsaturated carboxylic acid include a sodium salt of the unsaturated carboxylic acid, a lithium salt of the unsaturated carboxylic acid, and a calcium salt of the unsaturated carboxylic acid.

Examples of the organic salt of the unsaturated carboxylic acid include an ammonium salt of the unsaturated carboxylic acid, and an amine salt of the unsaturated carboxylic acid.

A content in terms of % by mole (unsaturated carboxylic acid unit and/or unit of salt of unsaturated carboxylic acid/water soluble polymer (1)) is, for example, 40% by mole, 35% by mole, 30% by mole, 25% by mole, 20% by mole, 15% by mole, 10% by mole, 9% by mole, 7% by mole, 5% by mole, 4% by mole, 3% by mole, 2% by mole, 1% by mole, 0.9% by mole, 0.7% by mole, 0.5% by mole, 0.3% by mole, 0.1% by mole, 0.09% by mole, 0.05% by mole, 0.01% by mole, or 0% by mole. In one embodiment, the above content is preferably 0% by mole or more and less than 40% by mole.

A content in terms of % by mole (unsaturated carboxylic acid unit and/or unit of salt of unsaturated carboxylic acid/water soluble polymer (2)) is, for example, 30% by mole, 25% by mole, 20% by mole, 15% by mole, 10% by mole, 9% by mole, 7% by mole, 5% by mole, 4% by mole, 3% by mole, 2% by mole, 1% by mole, 0.9% by mole, 0.7% by mole, 0.5% by mole, 0.3% by mole, 0.1% by mole, 0.09% by mole, 0.05% by mole, 0.01% by mole, or 0% by mole. In one embodiment, the above content is preferably 0% by mole to 30% by mole.

A content in terms of % by mass (unsaturated carboxylic acid unit and/or unit of salt of unsaturated carboxylic acid/water soluble polymer (1)) is, for example, 40% by mass, 35% by mass, 30% by mass, 25% by mass, 20% by mass, 15% by mass, 10% by mass, 9% by mass, 7% by mass, 5% by mass, 4% by mass, 3% by mass, 2% by mass, 1% by mass, 0.9% by mass, 0.7% by mass, 0.5% by mass, 0.3% by mass, 0.1% by mass, 0.09% by mass, 0.05% by mass, 0.01% by mass, or 0% by mass. In one embodiment, the above content is preferably 0% by mass or more and less than 40% by mass.

A content in terms of % by mass (unsaturated carboxylic acid unit and/or unit of salt of unsaturated carboxylic acid/water soluble polymer (2)) is, for example, 40% by mass, 35% by mass, 30% by mass, 25% by mass, 20% by mass, 15% by mass, 10% by mass, 9% by mass, 7% by mass, 5% by mass, 4% by mass, 3% by mass, 2% by mass, 1% by mass, 0.9% by mass, 0.7% by mass, 0.5% by mass, 0.3% by mass, 0.1% by mass, 0.09% by mass, 0.05% by mass, 0.01% by mass, or 0% by mass. In one embodiment, the above content is preferably 0% by mass to 30% by mass.

### (Monomer that is not any one of those described above: another component)

The water soluble polymer (1) may optionally contain a monomer (another component) unit that is not any one of the "N,N-dialkyl (meth)acrylamide, the (meth)acrylamide, and the unsaturated carboxylic acid and/or salt thereof.

The water soluble polymer (2) may optionally contain a monomer (another component) unit that is not any one of "the keto group-containing ethylenically unsaturated monomer, the (meth)acrylamide group-containing compound, and the unsaturated carboxylic acid and/or salt thereof.

One kind of another component may be used alone, or two or more kinds thereof may be used in combination.

Examples of the other component include an unsaturated sulfonic acid and/or a salt thereof, a polyfunctional monomer, an unsaturated phosphoric acid and/or a salt thereof, an α,β-unsaturated nitrile, a hydroxyl group-containing unsaturated carboxylic acid ester, a hydroxyl group-containing unsaturated carboxylic acid ester, a hydroxyl group-free unsaturated carboxylic acid ester, a conjugated diene, vinyl ether, and an aromatic vinyl compound.

Examples of the unsaturated sulfonic acid include an α,β-ethylenically unsaturated sulfonic acid such as vinyl sulfonic acid, styrene sulfonic acid, or (meth)allylsulfonic acid; and (meth)acrylamide t-butylsulfonic acid, 2-(meth)acrylamide-2-methylpropanesulfonic acid, 2-(meth)acrylamide-2-hydroxypropanesulfonic acid, a 3-sulfopropane (meth)acrylic acid ester, and a bis-(3-sulfopropyl)itaconic acid ester.

Examples of the salt of the unsaturated sulfonic acid include an inorganic salt of the unsaturated sulfonic acid and an organic salt of the unsaturated sulfonic acid.

Examples of the inorganic salt of the unsaturated sulfonic acid include a sodium salt of the unsaturated sulfonic acid, a lithium salt of the unsaturated sulfonic acid, and a calcium salt of the unsaturated sulfonic acid.

Examples of the organic salt of the unsaturated sulfonic acid include an ammonium salt of the unsaturated sulfonic acid and an amine salt of the unsaturated sulfonic acid.

In the present disclosure, "a compound corresponding to both a (meth)acrylamide group-containing compound and an unsaturated sulfonic acid and/or a salt thereof" means "an unsaturated sulfonic acid and/or a salt thereof."

A content in terms of % by mole (unsaturated sulfonic acid unit and/or unit of salt of unsaturated carboxylic acid/water soluble polymer (1)) is, for example, 10% by mole, 9% by mole, 8% by mole, 7% by mole, 6% by mole, 5% by mole, 4% by mole, 3% by mole, 2% by mole, 1% by mole, 0.9% by mole, 0.7% by mole, 0.5% by mole, 0.3% by mole, 0.1% by mole, 0.09% by mole, 0.07% by mole, 0.05% by mole, 0.04% by mole, 0.03% by mole, 0.025% by mole, 0.02% by mole, 0.01% by mole, or 0% by mole. In one embodiment, the above content is preferably 0% by mole to 10% by mole, and more preferably 0.05% by mole to 2% by mole.

A content in terms of % by mole (unsaturated sulfonic acid unit and/or unit of salt of unsaturated carboxylic acid/water soluble polymer (2)) is, for example, 10% by mole, 9% by mole, 8% by mole, 7% by mole, 6% by mole, 5% by mole, 4% by mole, 3% by mole, 2% by mole, 1% by mole, 0.9% by mole, 0.7% by mole, 0.5% by mole, 0.3% by mole, 0.1% by mole, 0.09% by mole, 0.07% by mole, 0.05% by mole, 0.04% by mole, 0.03% by mole, 0.025% by mole, 0.02% by mole, 0.01% by mole, or 0% by mole. In one embodiment, the above content is preferably 0% by mole to 10% by mole, and more preferably 0.05% by mole to 2% by mole.

A content in terms of % by mass (unsaturated sulfonic acid unit and/or unit of salt of unsaturated carboxylic acid/water soluble polymer (1)) is, for example, 10% by mass, 9% by mass, 8% by mass, 7% by mass, 6% by mass, 5% by mass, 4% by mass, 3% by mass, 2% by mass, 1% by mass, 0.9% by mass, 0.7% by mass, 0.5% by mass, 0.3% by mass, 0.1% by mass, 0.09% by mass, 0.07% by mass, 0.05% by mass, 0.04% by mass, 0.03% by mass, 0.025% by mass, 0.02% by mass, 0.01% by mass, or 0% by mass. In one embodiment, the above content is preferably 0% by mass to 10% by mass.

A content in terms of % by mass (unsaturated sulfonic acid unit and/or unit of salt of unsaturated carboxylic acid/water soluble polymer (2)) is, for example, 10% by mass, 9% by mass, 8% by mass, 7% by mass, 6% by mass, 5% by mass, 4% by mass, 3% by mass, 2% by mass, 1% by mass, 0.9% by mass, 0.7% by mass, 0.5% by mass, 0.3% by mass, 0.1% by mass, 0.09% by mass, 0.07% by mass, 0.05% by mass, 0.04% by mass, 0.03% by mass, 0.025% by mass, 0.02% by mass, 0.01% by mass, or 0% by mass. In one embodiment, the above content is preferably 0% by mass to 10% by mass.

"Polyfunctional monomer" means a monomer having two or more ethylenically unsaturated double bonds.

Examples of the polyfunctional monomer include an N,N'-alkylenebis(meth)acrylamide, a tri(allyl group)-containing monomer, and a tri((meth)acryloyl group)-containing triazine.

Examples of the N,N'-alkylenebis(meth)acrylamide include N,N'-methylenebis(meth)acrylamide and N,N'-ethylenebis(meth)acrylamide.

Examples of the tri(allyl group)-containing monomer include triallyl isocyanurate, triallyl trimellitate, triallyl amine, and triallyl (meth)acrylamide.

Examples of the tri((meth)acryloyl group)-containing triazine include 1,3,5-tri((meth)acryloyl)-1,3,5-triazine and 1,3,5-tri((meth)acryloyl)hexahydro -1,3,5-triazine.

Examples of the unsaturated phosphoric acid include vinylphosphonic acid, vinyl phosphate, bis((meth)acryloyloxyethyl) phosphate, diphenyl-2-(meth)acryloyloxyethyl phosphate, dibutyl-2-(meth)acryloyloxyethyl phosphate, dioctyl-2-(meth)acryloyloxyethyl phosphate, monomethyl-2-(meth)acryloyloxyethyl phosphate, and 3-(meth)acryloxy-2-hydroxypropane phosphate.

Examples of the salt of the unsaturated phosphoric acid include an inorganic salt of the unsaturated phosphoric acid and an organic salt of the unsaturated phosphoric acid.

Examples of the inorganic salt of the unsaturated phosphoric acid include a sodium salt of the unsaturated phosphoric acid, a lithium salt of the unsaturated phosphoric acid, and a calcium salt of the unsaturated phosphoric acid.

Examples of the organic salt of the unsaturated phosphoric acid include an ammonium salt of the unsaturated phosphoric acid and an amine salt of the unsaturated phosphoric acid.

Examples of the α,β-unsaturated nitrile include (meth)acrylonitrile, α-chloro(meth)acrylonitrile, α-ethyl (meth)acrylonitrile, and vinylidene cyanide.

A content in terms of % by mole (α,β-unsaturated nitrile unit/water soluble polymer (1)) is, for example, 20% by mole, 19% by mole, 17% by mole, 15% by mole, 13% by mole, 11% by mole, 10% by mole, 9% by mole, 8% by mole, 7% by mole, 6% by mole, 5% by mole, 4% by mole, 3% by mole, 2% by mole, 1% by mole, or 0% by mole. In one embodiment, the above content is preferably 0% by mole to 20% by mole.

A content in terms of % by mole (α,β-unsaturated nitrile unit/water soluble polymer (2)) is, for example, 20% by mole, 19% by mole, 17% by mole, 15% by mole, 13% by mole, 11% by mole, 10% by mole, 9% by mole, 8% by mole, 7% by mole, 6% by mole, 5% by mole, 4% by mole, 3% by mole, 2% by mole, 1% by mole, or 0% by mole. In one embodiment, the above content is preferably 0% by mole to 20% by mole.

A content in terms of % by mass (α,β-unsaturated nitrile unit/water soluble polymer (1)) is, for example, 20% by mass, 19% by mass, 17% by mass, 15% by mass, 13% by mass, 11% by mass, 10% by mass, 9% by mass, 8% by mass, 7% by mass, 6% by mass, 5% by mass, 4% by mass, 3% by mass, 2% by mass, 1% by mass, or 0% by mass. In one embodiment, the above content is preferably 0% by mass to 20% by mass.

A content in terms of % by mass (α,β-unsaturated nitrile unit/water soluble polymer (2)) is, for example, 20% by mass, 19% by mass, 17% by mass, 15% by mass, 13% by mass, 11% by mass, 10% by mass, 9% by mass, 8% by mass, 7% by mass, 6% by mass, 5% by mass, 4% by mass, 3% by mass, 2% by mass, 1% by mass, or 0% by mass. In one embodiment, the above content is preferably 0% by mass to 20% by mass.

Examples of the hydroxyl group-containing unsaturated carboxylic acid ester include 1-hydroxyethyl (meth)acrylate, 2-hydroxyethyl (meth)acrylate, 1-hydroxypropyl (meth)acrylate, 2-hydroxypropyl (meth)acrylate, 3-hydroxypropyl (meth)acrylate, 2-hydroxy-1-methylethyl (meth)acrylate, 1-hydroxy-2-methylethyl (meth)acrylate, 1-hydroxybutyl (meth)acrylate, 2-hydroxybutyl (meth)acrylate, 3-hydroxybutyl (meth)acrylate, 4-hydroxybutyl (meth)acrylate, 1-hydroxy-1-methyl-propyl (meth)acrylate, 2-hydroxy-1-methyl-propyl (meth)acrylate, 3-hydroxy-1-methyl-propyl (meth)acrylate, 1-ethyl-2-hydroxyethyl (meth)acrylate, 1-hydroxy-2-methyl-propyl (meth)acrylate, 2-hydroxy-2-methyl-propyl (meth)acrylate, 3-hydroxy-2-methyl-propyl (meth)acrylate, and 1,1-dimethyl-2-hydroxyethyl (meth)acrylate.

A content in terms of % by mole (hydroxyl group-containing unsaturated carboxylic acid ester unit/water soluble polymer (1)) is, for example, 20% by mole, 19% by mole, 17% by mole, 15% by mole, 13% by mole, 11% by mole, 10% by mole, 9% by mole, 8% by mole, 7% by mole, 6% by mole, 5% by mole, 4% by mole, 3% by mole, 2% by mole, 1% by mole, or 0% by mole. In one embodiment, the above content is preferably 0% by mole to 20% by mole.

A content in terms of % by mass (hydroxyl group-containing unsaturated carboxylic acid ester unit/water soluble polymer (2)) is, for example, 20% by mole, 19% by mole, 17% by mole, 15% by mole, 13% by mole, 11% by mole, 10% by mole, 9% by mole, 8% by mole, 7% by mole, 6% by mole, 5% by mole, 4% by mole, 3% by mole, 2% by mole, 1% by mole, or 0% by mole. In one embodiment, the above content is preferably 0% by mole to 20% by mole.

A content in terms of % by mass (hydroxyl group-containing unsaturated carboxylic acid ester unit/water soluble polymer (1)) is, for example, 20% by mass, 19% by mass, 17% by mass, 15% by mass, 13% by mass, 11% by mass, 10% by mass, 9% by mass, 8% by mass, 7% by mass, 6% by mass, 5% by mass, 4% by mass, 3% by mass, 2% by mass, 1% by mass, or 0% by mass. In one embodiment, the above content is preferably 0% by mass to 20% by mass.

A content in terms of % by mass (hydroxyl group-containing unsaturated carboxylic acid ester unit/water soluble polymer (2)) is, for example, 20% by mass, 19% by mass, 17% by mass, 15% by mass, 13% by mass, 11% by mass, 10% by mass, 9% by mass, 8% by mass, 7% by mass, 6% by mass, 5% by mass, 4% by mass, 3% by mass, 2% by mass, 1% by mass, or 0% by mass. In one embodiment, the above content is preferably 0% by mass to 20% by mass.

Examples of the hydroxyl group-free unsaturated carboxylic acid ester include a hydroxyl group-free (meth)acrylic ester. Examples of the hydroxyl group-free (meth)acrylic ester include a hydroxyl group-free linear (meth)acrylic ester, a hydroxyl group-free branched (meth)acrylic acid ester, a hydroxyl group-free alicyclic (meth)acrylic acid ester, and a hydroxyl group-free substituted alicyclic (meth)acrylic acid ester.

Examples of the hydroxyl group-free linear (meth)acrylic ester include methyl (meth)acrylate, ethyl (meth)acrylate, n-propyl (meth)acrylate, n-butyl (meth)acrylate, n-amyl (meth)acrylate, hexyl (meth)acrylate, n-octyl (meth)acrylate, nonyl (meth)acrylate, decyl (meth)acrylate, and 2-methoxyethyl (meth)acrylate.

Examples of the hydroxyl group-free branched (meth)acrylic ester include i-propyl (meth)acrylate, i-butyl (meth)acrylate, i-amyl (meth)acrylate, and 2-ethylhexyl (meth)acrylate.

Examples of the hydroxyl group-free alicyclic (meth)acrylic ester include cyclohexyl (meth)acrylate.

Examples of the conjugated diene include 1,3-butadiene, 2-methyl-1,3-butadiene, 2,3-dimethyl-1,3-butadiene, 2-chloro-1,3-butadiene, a substituted linear conjugated pentadiene, and a substituted and side-chain conjugated hexadiene.

Examples of the vinyl ether include a hydroxyalkyl vinyl ether and a polyalkylene glycol monovinyl ether.

Examples of the hydroxyalkyl vinyl ether include a hydroxy linear alkyl vinyl ether, a hydroxy branched alkyl vinyl ether, and a hydroxycycloroalkyl vinyl ether.

Examples of the hydroxy linear alkyl vinyl ether include 2-hydroxyethyl vinyl ether, 3-hydroxypropyl vinyl ether, 4-hydroxybutyl vinyl ether, and 5-hydroxypentyl vinyl ether.

Examples of the hydroxy branched alkyl vinyl ether include 2-hydroxypropyl vinyl ether, 2-hydroxy-2-methylpropyl vinyl ether, and 4-hydroxy-2-methylbutyl vinyl ether.

Examples of the hydroxycycloroalkyl vinyl ether include 4-hydroxycyclopentyl vinyl ether.

Examples of the polyalkylene glycol monovinyl ether include polymethylene glycol monovinyl ether, polyethylene glycol monovinyl ether, and polypropylene glycol monovinyl ether.

Examples of the aromatic vinyl compound include styrene, α-methylstyrene, p-methylstyrene, vinyltoluene, chlorostyrene, and divinylbenzene.

A content in terms of % by mass (another component (excluding the unsaturated sulfonic acid and/or a salt thereof, the α,β-unsaturated nitrile, the hydroxyl group-containing unsaturated carboxylic acid ester) unit/water soluble polymer (1)) is, for example, less than 10% by mass, less than 9% by mass, less than 7% by mass, less than 5% by mass, less than 4% by mass, less than 2% by mass, less than 1% by mass, less than 0.9% by mass, less than 0.7% by mass, less than 0.5% by mass, less than 0.4% by mass, less than 0.2% by mass, less than 0.1% by mass, or 0% by mass.

A content in terms of % by mass (another component (excluding the unsaturated sulfonic acid and/or a salt thereof, the α,β-unsaturated nitrile, the hydroxyl group-containing unsaturated carboxylic acid ester) unit/water soluble polymer (2)) is, for example, less than 10% by mass, less than 9% by mass, less than 7% by mass, less than 5% by mass, less than 4% by mass, less than 2% by mass, less than 1% by mass, less than 0.9% by mass, less than 0.7% by mass, less than 0.5% by mass, less than 0.4% by mass, less than 0.2% by mass, less than 0.1% by mass, or 0% by mass.

A content in terms of % by mole (another component (excluding unsaturated sulfonic acid and/or a salt thereof, α, β-unsaturated nitrile, hydroxyl group-containing unsaturated carboxylic acid ester) units/water soluble polymer (1)) is, for example, less than 10% by mole, less than 9% by mole, less than 7% by mole, less than 5% by mole, less than 4% by mole, less than 3% by mole, less than 2% by mole, less than 1% by mole, less than 0.9% by mole, less than 0.7% by mole, less than 0.5% by mole, less than 0.4% by mole, less than 0.2% by mole, less than 0.1% by mole, or 0% by mole.

A content in terms of % by mole (another component (excluding unsaturated sulfonic acid and/or a salt thereof, α, β-unsaturated nitrile, hydroxyl group-containing unsaturated carboxylic acid ester) units/water soluble polymer (2)) is, for example, less than 10% by mole, less than 9% by mole, less than 7% by mole, less than 5% by mole, less than 4% by mole, less than 3% by mole, less than 2% by mole, less than 1% by mole, less than 0.9% by mole, less than 0.7% by mole, less than 0.5% by mole, less than 0.4% by mole, less than 0.2% by mole, less than 0.1% by mole, or 0% by mole.

### <Manufacturing method (for water soluble polymer)>

Examples of the manufacturing method (for a water soluble polymer) include a radical polymerization method. In one embodiment, preferred examples of the polymerization temperature include 50°C to 100°C. In one embodiment, preferred examples of the polymerization time include 1 hour to 10 hours.

Examples of the radical polymerization initiator include an azo-based initiator, a persulfate, and a redox-based polymerization initiator.

Examples of the azo-based initiator include 2,2'-azobis-2-amidinopropane dihydrochloride.

Examples of the persulfate include potassium persulfate and ammonium persulfate.

Examples of the redox-based polymerization initiator include a combination system (persulfate and a reducing agent).

Examples of the reducing agent include sodium hydrogen sulfite.

The using amount used in terms of parts by mass (radical polymerization initiator/monomer group) is preferably 0.05 parts by mass to 5.0 parts by mass, and more preferably 0.1 parts by mass to 3.0 parts by mass.

Before the radical polymerization reaction and/or in a case where the obtained water soluble polymer is made to be water soluble, the pH of the reaction solution may be adjusted preferably using a neutralizing agent. Examples of the preferred reason for this include the improvement of manufacturing stability. In that case, the pH is preferably 2 to 11. Examples of the neutralizing agent include ammonia, an organic amine, potassium hydroxide, sodium hydroxide, and lithium hydroxide. In addition, a metal ion sealing agent (such as ethylenediaminetetraacetic acid (EDTA) or a salt thereof) may also be used for the same intended purpose.

### <Physical properties and like (of water soluble polymer)>

A weight average molecular weight (Mw) (water soluble polymer (1)) is, for example, 6 million, 5.5 million, 5 million, 4.5 million, 4 million, 3.5 million, 3 million, 2.5 million, 2 million, 1.5 million, 1 million, 950,000, 900,000, 850,000, 800,000, 750,000, 700,000, 650,000, 600,000, 550,000, 500,000, 450,000, 400,000, 350,000, 300,000, 250,000, 200,000, 150,000, or 100,000. In one embodiment, the weight average molecular weight is preferably 100,000 to 6,000,000, and more preferably 350,000 to 6,000,000.

A weight average molecular weight (Mw) (water soluble polymer (2)) is, for example, 6 million, 5.5 million, 5 million, 4.5 million, 4 million, 3.5 million, 3 million, 2.5 million, 2 million, 1.5 million, 1 million, 950,000, 900,000, 850,000, 800,000, 750,000, 700,000, 650,000, 600,000, 550,000, 500,000, 450,000, 400,000, 350,000, 300,000, 250,000, 200,000, 150,000, or 100,000. In one embodiment, the weight average molecular weight is preferably 100,000 to 6,000,000, and more preferably 350,000 to 6,000,000.

A number average molecular weight (Mn) (water soluble polymer (1)) is, for example, 6 million, 5.5 million, 5 million, 4.5 million, 4 million, 3.5 million, 3 million, 2.5 million, 2 million, 1.5 million, 1 million, 950,000, 900,000, 850,000, 800,000, 750,000, 700,000, 650,000, 600,000, 550,000, 500,000, 450,000, 400,000, 300,000, 200,000, 100,000, 50,000, or 10,000. In one embodiment, the number average molecular weight is preferably 10,000 or more.

A number average molecular weight (Mn) (water soluble polymer (2)) is, for example, 6 million, 5.5 million, 5 million, 4.5 million, 4 million, 3.5 million, 3 million, 2.5 million, 2 million, 1.5 million, 1 million, 950,000, 900,000, 850,000, 800,000, 750,000, 700,000, 650,000, 600,000, 550,000, 500,000, 450,000, 400,000, 300,000, 200,000, 100,000, 50,000, or 10,000. In one embodiment, the number average molecular weight is preferably 10,000 or more.

A molecular weight distribution (Mw/Mn) of the water soluble polymer (1) is, for example, 15, 14, 13, 11, 10, 9, 7.5, 5, 4, 3, 2.9, 2.5, 2, 1.5, or 1.1. In one embodiment, the molecular weight distribution (Mw/Mn) is preferably 1.1 to 15.

A molecular weight distribution (Mw/Mn) of the water soluble polymer (2) is, for example, 15, 14, 13, 11, 10, 9, 7.5, 5, 4, 3, 2.9, 2.5, 2, 1.5, or 1.1. In one embodiment, the molecular weight distribution (Mw/Mn) is preferably 1.1 to 15.

· The weight average molecular weight, the number average molecular weight, and the molecular weight distribution may be measured under the following conditions.
· Measuring instrument: Manufactured by Tosoh Corporation, GPC (model number: HLC-8220)
· Column: TSKgel G2500PW_{XL} (manufactured by Tosoh Corporation), TSKgel G4000 (manufactured by Tosoh Corporation), and SHODEX SB-806M-HQ (manufactured by Showa Denko K.K.)
· Eluent: 0.2 M phosphate buffer solution/acetonitrile solution (90/10, PH: 8.0)
· Column temperature: 40°C
· Calibration curve: Standard polyethylene oxide-polyethylene glycol
· Measurement concentration: 0.10% by mass (in terms of concentration of water soluble polymer)
· Measurement method: Measurement is carried out after filtration with a filter.
· Filter: Cellulose acetate cartridge filter (manufactured by Tosoh Corporation, Myshori Disk W-13-2, pore diameter: 0.2 µm)

A B-type viscosity (water soluble polymer (1)/water = 15% by mass/85% by mass) is, for example, 100,000 mPa s, 90,000 mPa s, 80,000 mPa s, 70,000 mPa s, 60,000 mPa·s, 50,000 mPa·s, 40,000 mPa·s, 30,000 mPa·s, 20,000 mPa·s, 10,000 mPa·s, 9,000 mPa s, 8,000 mPa s, 7,000 mPa s, 6,000 mPa s, 5,000 mPa s, 4,000 mPa s, 3,000 mPa·s, 2,000 mPa·s, or 1,000 mPa s. In one embodiment, the B-type viscosity is preferably 1,000 mPa s to 100,000 mPa s.

A B-type viscosity (water soluble polymer (2)/water = 15% by mass/85% by mass) is, for example, 100,000 mPa·s, 90,000 mPa·s, 80,000 mPa·s, 70,000 mPa·s, 60,000 mPa s, 50,000 mPa s, 40,000 mPa s, 30,000 mPa s, 20,000 mPa s, 10,000 mPa s, 9,000 mPa s, 8,000 mPa s, 7,000 mPa s, 6,000 mPa s, 5,000 mPa s, 4,000 mPa s, 3,000 mPa·s, 2,000 mPa·s, or 1,000 mPa s. In one embodiment, the B-type viscosity is preferably 1,000 mPa s to 100,000 mPa s.

The B-type viscosity may be measured under the following conditions.
Concentration of solid contents: 15% by mass
Measurement temperature: 25°C
B-type viscometer: Manufactured by TOKI SANGYO Co., Ltd., product name: "B-type viscometer, model: BM"
Viscosity: 20,000 to 100,000 mPa s; where a No. 4 rotor is used, and a rotation speed is 6 rpm.
Viscosity: less than 20,000 mPa s; where a No. 3 rotor is used, and a rotation speed is 6 rpm.

A content in terms of % by mass (water soluble polymer (1)/power storage device binder aqueous solution) is, for example, 20% by mass, 19% by mass, 15% by mass, 14% by mass, 12% by mass, 10% by mass, 9% by mass, 7% by mass, 6% by mass, 5% by mass, 4% by mass, 3% by mass, 2% by mass, or 1% by mass. In one embodiment, the above content is preferably 1% by mass to 20% by mass.

A content in terms of % by mass (water soluble polymer (2)/power storage device binder aqueous solution) is, for example, 20% by mass, 19% by mass, 15% by mass, 14% by mass, 12% by mass, 10% by mass, 9% by mass, 7% by mass, 6% by mass, 5% by mass, 4% by mass, 3% by mass, 2% by mass, or 1% by mass. In one embodiment, the above content is preferably 1% by mass to 20% by mass.

### <Water>

Examples of the water include ultrapure water, pure water, distilled water, ion exchange water, and tap water.

A content in terms of % by mass (water/power storage device separator binder aqueous solution) is, for example, 99.9% by mass, 99% by mass, 95% by mass, 90% by mass, 85% by mass, or 80% by mass. In one embodiment, the above content is preferably 80% by mass to 99.9% by mass.

A mass ratio [water soluble polymer (1)/water] is, for example, 0.25, 0.24, 0.22, 0.20, 0.18, 0.15, 0.12, 0.10, 0.09, 0.07, or 0.05. In one embodiment, the mass ratio is preferably 0.05 to 0.25.

A mass ratio [water soluble polymer (2)/water] is, for example, 0.25, 0.24, 0.22, 0.20, 0.18, 0.15, 0.12, 0.10, 0.09, 0.07, or 0.05. In one embodiment, the mass ratio is preferably 0.05 to 0.25.

### <Additive>

The power storage device separator binder aqueous solution may optionally contain, as an additive, an agent that does not correspond to any one of "water soluble polymer (1), water soluble polymer (2), and water"". One kind of additive may be used alone, or two or more kinds thereof may be used in combination.

Examples of the additive include a dispersant, a leveling agent, and an antioxidant.

Examples of the dispersant include an anionic dispersant, a cationic dispersant, a nonionic dispersant, and a macromolecular dispersant.

Examples of the leveling agent include surfactants such as an alkyl-based surfactant, a silicone-based surfactant, a fluorine-based surfactant, and a metal-based surfactant. In a case where a surfactant is used, cissing that occurs during coating can be prevented, and the smoothness of a layer (coating layer) of the above-described slurry can be improved.

Examples of the antioxidant include a phenol compound, a hydroquinone compound, an organic phosphorus compound, a sulfur compound, a phenylenediamine compound, and a polymer-type phenol compound.

"Polymer-type phenol compound" means a polymer having a phenol structure. The weight average molecular weight (polymer-type phenol compound) is preferably 200 to 1000, and more preferably 600 to 700.

A content in terms of parts by mass (additive/water soluble polymer (1)) is, for example, less than 5% by mass, less than 4% by mass, less than 2% by mass, less than 1% by mass, less than 0.9% by mass, less than 0.5% by mass, less than 0.4% by mass, less than 0.2% by mass, or less than 0.1% by mass, less than 0.09% by mass, less than 0.05% by mass, less than 0.04% by mass, 0.02% by mass less than 0.01% by mass, less than 0% by mass.

A content in terms of parts by mass (additive/water soluble polymer (2)) is, for example, less than 5% by mass, less than 4% by mass, less than 2% by mass, less than 1% by mass, less than 0.9% by mass, less than 0.5% by mass, less than 0.4% by mass, less than 0.2% by mass, or less than 0.1% by mass, less than 0.09% by mass, less than 0.05% by mass, less than 0.04% by mass, 0.02% by mass less than 0.01% by mass, less than 0% by mass.

A content in terms of % by mass (additive/power storage device separator binder aqueous solution) is, for example, less than 5% by mass, less than 4% by mass, less than 2% by mass, less than 1% by mass, less than 0.9% by mass, less than 0.5% by mass, less than 0.4% by mass, less than 0.2% by mass, or less than 0.1% by mass, less than 0.09% by mass, less than 0.05% by mass, less than 0.04% by mass, 0.02% by mass less than 0.01% by mass, less than 0% by mass.

### <Physical properties of aqueous solution>

A pH (power storage device separator binder aqueous solution) is, for example, 9, 8.9, 8.5, 8, 7.9, 7.5, 7, 6.9, 6.5, 6, 5.9, 5.5, 5, 4.9, 4.5, 4, 3.9, 3.6, 3.5, 3.4, 3.2, 3.1, or 3. In one embodiment, the pH is preferably 3 to 9.

The pH may be measured under the following conditions.
Measuring instrument: Glass electrode pH meter (for example, product name: "pH Meter D-52", manufactured by Horiba, Ltd.)
Measurement temperature: 25°C

The usage form (of the power storage device separator binder aqueous solution) is a form of, for example, a battery separator binder aqueous solution, a non-aqueous secondary battery separator binder aqueous solution, a lithium ion battery separator binder aqueous solution, or a sodium ion battery separator binder aqueous solution.

### [Power storage device separator slurry: slurry]

The present disclosure relates to a power storage device separator slurry,
in which the power storage device separator slurry contains a water soluble polymer (1), water, and non-conductive particles, or contains a water soluble polymer (2), a hydrazide, water, and non-conductive particles,
the water soluble polymer (1) contains 20% by mole to 80% by mole of an N,N-dialkyl (meth)acrylamide unit and 10% by mole to 80% by mole of a (meth)acrylamide unit,
the water soluble polymer (2) contains 0.2% by mole to 10% by mole of a keto group-containing ethylenically unsaturated monomer unit and 65% by mole to 99.7% by mole of a (meth)acrylamide group-containing compound unit, and
the hydrazide has two or more hydrazide groups.

In the present disclosure, "slurry" means a suspension of a liquid and solid particles.

Examples of the water soluble polymer (1), the water soluble polymer (2), and the water include those described above.

A content in terms of % by mass (water soluble polymer (1)/slurry) is, for example, 10% by mass, 9% by mass, 8% by mass, 7% by mass, 6% by mass, 5% by mass, 4% by mass, 3% by mass, 2% by mass, 1% by mass, 0.9% by mass, 0.7% by mass, 0.5% by mass, 0.3% by mass, or 0.1% by mass. In one embodiment, the above content is preferably 0.1% by mass to 10% by mass.

A content in terms of % by mass (water soluble polymer (2)/slurry) is, for example, 10% by mass, 9% by mass, 8% by mass, 7% by mass, 6% by mass, 5% by mass, 4% by mass, 3% by mass, 2% by mass, 1% by mass, 0.9% by mass, 0.7% by mass, 0.5% by mass, 0.3% by mass, or 0.1% by mass. In one embodiment, the above content is preferably 0.1% by mass to 10% by mass.

A content in terms of % by mass (water/slurry) is, for example, 80% by mass, 70% by mass, 65% by mass, 60% by mass, 55% by mass, 50% by mass, 45% by mass, 40% by mass, 35% by mass, or 30% by mass. In one embodiment, the above content is preferably 30% by mass to 80% by mass.

A pH (power storage device separator slurry) is, for example, 9, 8.9, 8.5, 8, 7.9, 7.5, 7, 6.9, 6.5, 6, 5.9, 5.5, 5, 4.9, 4.5, 4, 3.9, 3.6, 3.5, 3.4, 3.2, 3.1, or 3. In one embodiment, the pH is preferably 3 to 9.

### <Non-conductive particles>

One kind of non-conductive particles may be used alone, or two or more kinds thereof may be used in combination.

Examples of the non-conductive particles include oxide particles, nitride particles, covalent crystal particles, poorly soluble ionic crystal particles, and clay fine particles.

Examples of the oxide particles include aluminum oxide (alumina), a hydrate of aluminum oxide (boehmite (AlOOH), gibbsite (Al(OH)₃), bakelite, iron oxide, silicon oxide, magnesium oxide (magnesia), magnesium hydroxide, calcium oxide, titanium oxide (titania), BaTiO₃, ZrO, and an alumina-silica composite oxide.

Examples of the nitride particles include aluminum nitride, silicon nitride, and boron nitride.

Examples of the covalent crystal particles include silicon and diamond.

Examples of the poorly soluble ionic crystal particles include barium sulfate, calcium fluoride, and barium fluoride.

Examples of the clay fine particles include clay particles such as silica, talc, and montmorillonite.

In one embodiment, the non-conductive particles are preferably boehmite, alumina, magnesium oxide, or barium sulfate, and more preferably boehmite. Examples of the preferred reason for this include low water absorbency and high heat resistance.

An average particle diameter (of non-conductive particles) is for example, 30 µm, 25 µm, 20 µm, 15 µm, 10 µm, 5 µm, 1 µm, 0.5 µm, 0.1 µm, 0.05 µm, or 0.01 µm. In one embodiment, the average particle diameter is preferably 0.01 µm to 30 µm.

A content in terms of % by mass (non-conductive particles/slurry) is, for example, 99.9% by mass, 95% by mass, 90% by mass, 80% by mass, 70% by mass, 60% by mass, 50% by mass, 40% by mass, 30% by mass, 20% by mass, 10% by mass, 5% by mass, 1% by mass, 0.5% by mass, 0.2% by mass, or 0.1% by mass. In one embodiment, the above content is preferably 0.1% by mass to 99.9% by mass.

A content in terms of parts by mass (water soluble polymer (1)/non-conductive particles) is, for example, 15 parts by mass, 14 parts by mass, 13 parts by mass, 12 parts by mass, 11 parts by mass, 10 parts by mass, 9 parts by mass, 8 parts by mass, 7 parts by mass, 6 parts by mass, 5 parts by mass, 4 parts by mass, 3 parts by mass, 2 parts by mass, 1.5 parts by mass, or 1 part by mass. In one embodiment, the above content is preferably 1 part by mass to 15 parts by mass, more preferably 1.5 parts by mass to 14 parts by mass, and still more preferably 2 parts by mass to 12 parts by mass.

A content in terms of parts by mass (water soluble polymer (2)/non-conductive particles) is, for example, 15 parts by mass, 14 parts by mass, 13 parts by mass, 12 parts by mass, 11 parts by mass, 10 parts by mass, 9 parts by mass, 8 parts by mass, 7 parts by mass, 6 parts by mass, 5 parts by mass, 4 parts by mass, 3 parts by mass, 2 parts by mass, 1.5 parts by mass, or 1 part by mass. In one embodiment, the above content is preferably 1 part by mass to 15 parts by mass, more preferably 1.5 parts by mass to 14 parts by mass, and still more preferably 2 parts by mass to 12 parts by mass.

### <Slurry viscosity adjusting solvent>

One kind of slurry viscosity adjusting solvent may be used alone, or two or more kinds thereof may be used in combination.

Examples of the slurry viscosity adjusting solvent include an amide solvent, a hydrocarbon solvent, an alcohol solvent, a ketone solvent, an ether solvent, an ester solvent, an amine solvent, a lactone solvent, a sulfoxide/sulfone solvent, and water.

Examples of the amide solvent include N-methylpyrrolidone, dimethylformamide, and N,N-dimethylacetamide.

Examples of the hydrocarbon solvent include toluene, xylene, n-dodecane, and tetralin.

Examples of the alcohol solvent include methanol, ethanol, 2-propanol, isopropyl alcohol, 2-ethyl-1-hexanol, 1-nonanol, and lauryl alcohol.

Examples of the ketone solvent include acetone, methyl ethyl ketone, cyclohexanone, phorone, acetophenone, and isophorone.

Examples of the ether solvent include dioxane and tetrahydrofuran (THF).

Examples of the ester solvent include benzyl acetate, isopentyl butyrate, methyl lactate, ethyl lactate, and butyl lactate.

Examples of the amine solvent include o-toluidine, m-toluidine, and p-toluidine.

Examples of the lactone solvent include γ-butyrolactone and δ-butyrolactone.

Examples of the sulfoxide/sulfone solvent include dimethyl sulfoxide and sulfolane.

In one embodiment, the slurry viscosity adjusting solvent preferably includes N-methylpyrrolidone. Examples of the preferred reason for this include the improvement of coating workability.

A content in terms of % by mass (slurry viscosity adjusting solvent/slurry) is, for example, 10% by mass, 9% by mass, 8% by mass, 7% by mass, 6% by mass, 5% by mass, 4% by mass, 3% by mass, 2% by mass, 1% by mass, 0.5% by mass, 0.1% by mass, or 0% by mass. In one embodiment, the above content is preferably 0% by mass to 10% by mass.

### <Additive>

The slurry may contain, as an additive, the one that does not correspond to any one of the water soluble polymer (1), the water soluble polymer (2), the water, the non-conductive particles, and the slurry viscosity adjusting solvent. Examples of the additive include those described above.

A content in terms of parts by mass (additive/water soluble polymer (1)) is, for example, 0 parts by mass to 5 parts by mass, less than 1 part by mass, less than 0.1 parts by mass, less than 0.01 parts by mass, or 0 parts by mass.

A content in terms of parts by mass (additive/water soluble polymer (2)) is, for example, 0 parts by mass to 5 parts by mass, less than 1 part by mass, less than 0.1 parts by mass, less than 0.01 parts by mass, or 0 parts by mass.

A content in terms of % by mass (additive/non-conductive particles) is, for example, 0 parts by mass to 5 parts by mass, less than 1 part by mass, less than 0.1 parts by mass, less than 0.01 parts by mass, or 0 parts by mass.

The slurry can be manufactured by mixing the above agents.

Examples of the mixing means (for slurry) include a ball mill, a sand mill, a pigment dispersing machine, a mortar machine, an ultrasonic dispersing machine, a homogenizer, a planetary mixer, and a Hobart mixer.

The usage form (of the power storage device separator slurry) is a form of, for example, a power storage device separator slurry, a battery separator slurry, a non-aqueous secondary battery separator slurry, a lithium ion battery separator slurry, or a sodium ion battery separator slurry.

### [Power storage device separator: separator]

The present disclosure relates to a power storage device separator that includes a dried product of the above-described power storage device separator slurry, on a base material.

Examples of the base material include a porous polyolefin resin base material and a plastic nonwoven fabric.

### (Porous polyolefin resin base material)

"Porous polyolefin resin base material" means a microporous membrane containing 50% by mass or more of a resin such as polyolefins or a mixture or copolymer thereof.

One kind of polyolefin resin may be used alone, or two or more kinds thereof may be used in combination. Examples of the polyolefin resin include homopolymers and copolymers of ethylene, propylene, 1-butene, 4-methyl-1-pentene, 1-hexene, 1-octene, and the like.

Examples of the three-dimensional structure (polyolefin resin) include those that are isotactic, syndiotactic, or atactic.

In one embodiment, the polyolefin resin is preferably high density polyethylene, and more preferably high density polyethylene or polypropylene.

In one embodiment, a content in terms of % by mass (polyolefin resin/base material) is, for example, preferably 50% by mass to 100% by mass, more preferably 60% by mass to 100% by mass, and still more preferably 70% by mass to 100% by mass. Examples of the preferred reason for this include the improvement of shutdown performance.

The porous polyolefin resin base material may optionally contain a filler and a fiber compound. The strength, the hardness, and the thermal shrinkage rate (of the porous polyolefin resin base material) can be controlled by a filler and a fiber compound.

The porous polyolefin resin base material may be subjected to surface treatment, as necessary.

Examples of the surface treatment include coating treatment, electromagnetic radiation treatment, and plasma treatment.

In one embodiment, the surface treatment preferably includes coating treatment with a polar group-containing macromolecule. The coating treatment makes it possible to improve the electrolytic solution impregnation properties and the adherence to a dried product of a slurry. Examples of the polar group include a carboxylic acid group, a hydroxyl group, and a sulfonic acid group.

In one embodiment, the thickness (of the porous polyolefin resin base material) is preferably 2 µm to 100 µm, and more preferably 5 µm to 50 µm.

### (Plastic nonwoven fabric)

Examples of the plastic nonwoven fabric include a nonwoven fabric made only of synthetic fibers.

A material (of synthetic fibers) includes, for example, a polyolefin-based resin, a polyester-based resin, an acrylonitrile-based resin, a polyamide-based resin, a polyvinyl acetate-based resin, an ethylene-vinyl acetate copolymer resin, an acrylic resin, a polyvinyl chloride-based resin, a polyvinylidene chloride-based resin, a polyvinyl ether-based resin, a polyvinyl ketone-based resin, a polyether-based resin, a polyvinyl alcohol-based resin, a diene-based resin, a polyurethane-based resin, a phenol-based resin, a melamine-based resin, a furan-based resin, a urea-based resin, an aniline-based resin, an unsaturated polyester-based resin, an alkyd-based resin, a fluorine-based resin, a silicone-based resin, a polyamide imide-based resin, a polyphenylene sulfide-based resin, a polyimide-based resin, a polycarbonate-based resin, a polyazomethine-based resin, a polyester amide-based resin, a polyether ether ketone-based resin, a poly-p-phenylenebenzobisoxazole resin, a polybenzimidazole-based resin, and an ethylene-vinyl alcohol copolymer-based resin.

Examples of the polyolefin-based resin include polypropylene, polyethylene, polymethylpentene, an ethylene-vinyl alcohol copolymer, and an olefin-based copolymer.

Examples of the polyester-based resin include a polyethylene terephthalate (PET)-based resin, a polybutylene terephthalate (PBT)-based resin, a polytrimethylene terephthalate (PPT)-based resin, a polyethylene naphthalate (PEN)-based resin, a polybutylene naphthalate-based resin, a polyethylene isonaphthalate-based resin, and a fully aromatic polyester-based resin.

Examples of the acrylonitrile-based-based resin include polyacrylonitrile, and a copolymer of acrylonitrile and a (meth)acrylic acid derivative, vinyl acetate, or the like.

Examples of the polyamide-based resin include an aliphatic polyamide, a fully aromatic polyamide, and a semi-aromatic polyamide.

Examples of the aliphatic polyamide include nylon.

Examples of the fully aromatic polyamide include poly-p-phenylene terephthalamide, poly-p-phenylene terephthalamide-3,4-diphenyl ether terephthalamide, and poly-m-phenylene isophthalamide.

"Semi-aromatic polyamide" means a polyimide in which a part of the aromatic polyamide main chain is an aliphatic chain.

The fiber (of the plastic nonwoven fabric) may optionally contain a fiber other than the synthetic resin fiber.

Examples of the fiber other than the synthetic resin fiber include solvent-spun cellulose, a fibrillated product of a solvent-spun cellulose, regenerated cellulose, a fibrillated product of regenerated cellulose, a natural cellulose fiber, a pulped product of a natural cellulose fiber, a fibrillated product of a natural cellulose fiber, and an inorganic fiber.

A content in terms of % by mass (fibers other than synthetic fibers/nonwoven fabric) is preferably 30% by mass or less, more preferably 20% by mass or less, and still more preferably 10% by mass or less.

Examples of the form (of fibers) include a form of single fibers and a form of composite fibers.

"Single fibers" means fibers made of a single resin. "Composite fibers" means fibers made of two or more kinds of resins.

Examples of the composite fiber include fibers of a core-sheath type, an eccentric type, a side-by-side type, a sea-island type, an orange type, and a multiple bimetal type.

In one embodiment, the average fiber diameter (of the plastic nonwoven fabric) is preferably 1 µm to 15 µm, and more preferably 1 µm to 10 µm.

In the present disclosure, "average fiber diameter" means the average value of the fiber diameters of 20 fibers randomly selected from a scanning electron photomicrographic image.

In one embodiment, the average pore diameter (of the plastic nonwoven fabric) is preferably 1 µm to 20 µm, more preferably 3 µm to 20 µm, and still more preferably 5 µm to 20 µm.

In the present disclosure, "pore diameter" means the width of the gap between fibers. "Average pore diameter" means the average value of the pore diameters of 20 fibers randomly selected from a scanning electron photomicrographic image.

The thickness (of the plastic nonwoven fabric) is preferably 5 µm to 25 µm, and more preferably 5 µm to 15 µm. Examples of the preferred reason for this include reducing the thickness to obtain a separator having a reduced internal resistance.

### <Manufacturing method (for power storage device separator)>

Examples of the manufacturing method (for the power storage device separator) include a method including the following steps.
Application step: The power storage device separator slurry is applied onto one surface or both surfaces of a base material.
Drying step: The applied power storage device separator slurry is dried.

### (Application step)

Examples of the application method include a coating method, a printing method, a transfer method, and an immersion method.

Examples of the coating method include methods using a blade, a rod, a reverse roll, a lip, a die, a curtain, and an air knife.

Examples of the printing method include flexography printing, screen printing, offset printing, gravure printing, and inkjet printing.

Examples of the transfer method include roll transfer and film transfer.

Examples of the immersion method include dipping.

### [Drying step]

Examples of the drying method include blow drying (with warm air, hot air, low humidity air, or the like), irradiation drying (with infrared rays, far infrared rays, electron beam, or the like), and vacuum drying.

The drying temperature is preferably 40°C to 90°C, and more preferably 50°C to 80°C.

The drying time is preferably 5 seconds to 3 minutes, and more preferably 15 seconds to 2 minutes.

The manufacturing method (for the power storage device separator) may optionally include a pressing step.

Examples of the pressing means include a metal mold press and a roll press.

The usage form (of the power storage device separator) is a form of, for example, a battery separator, a non-aqueous secondary battery separator, a lithium ion battery separator, or a sodium ion battery separator.

### [Power storage device separator/electrode laminate: separator/electrode laminate]

The present disclosure relates to a power storage device separator/electrode laminate that includes a dried product of the above-described power storage device separator slurry, on an active material side of an electrode. The power storage device separator/electrode laminate is obtained by applying the power storage device separator slurry onto an electrode and drying it.

Examples of the electrode that is used in the manufacturing of the power storage device separator/electrode laminate include various known electrodes.

Examples of the manufacturing method (for the power storage device separator/electrode laminate) include a method including the following steps.
(1) A step of applying an electrode material-containing slurry onto a collector
(2) A step of drying the electrode material-containing slurry
(3) A step of pressing a dried product of the electrode material-containing slurry
(4) A step of applying a power storage device separator slurry onto the dried product of the electrode material-containing slurry
(5) A step of drying the power storage device separator slurry

Examples of the coating method, the drying method, and the pressing method include the above-described methods.

The usage form (of the power storage device separator/electrode laminate) is a form of, for example, battery separator/electrode laminate, battery separator/negative electrode laminate, battery separator/positive electrode laminate, non-aqueous secondary battery separator/electrode laminate, non-aqueous secondary battery separator/negative electrode laminate, non-aqueous secondary battery separator/positive electrode laminate, lithium ion battery separator/electrode laminate, lithium ion battery separator/negative electrode laminate, lithium ion battery separator/positive electrode laminate, sodium ion battery separator/electrode laminate, sodium ion battery separator/negative electrode laminate, and sodium ion battery separator/positive electrode laminate.

### [Power storage device]

The present disclosure relates to a power storage device that includes the above-described power storage device separator and/or the above-described power storage device separator/electrode laminate.

### (Electrolytic solution)

The power storage device contains an electrolytic solution. Examples of the electrolytic solution include a solution obtained by dissolving a supporting electrolyte in a non-aqueous solvent.

One kind of non-aqueous solvent may be used alone, or two or more kinds thereof may be used in combination.

Examples of the non-aqueous solvent include a chain-like carbonate solvent, a cyclic carbonate solvent, a chain-like ether solvent, a cyclic ether solvent, a chain-like ester solvent, a cyclic ester solvent, and acetonitrile.

Examples of the chain-like carbonate solvent include diethyl carbonate, dimethyl carbonate, and ethyl methyl carbonate.

Examples of the cyclic carbonate solvent include ethylene carbonate, propylene carbonate, and butylene carbonate.

Examples of the chain-like ether solvent include 1,2-dimethoxyethane.

Examples of the cyclic ether solvent include tetrahydrofuran, 2-methyltetrahydrofuran, sulfolane, and 1,3-dioxolane.

Examples of the chain-like ester solvent include methyl formate, methyl acetate, and methyl propionate.

Examples of the cyclic ester solvent include γ-butyrolactone and γ-valerolactone.

In one embodiment, the non-aqueous solvent preferably includes a combination of a cyclic carbonate and a chain-like carbonate.

One kind of supporting electrolyte may be used alone, or two or more kinds thereof may be used in combination.

Examples of the supporting electrolyte include a lithium salt. Examples of the lithium salt include LiPF₆, LiAsF₆, LiBF₄, LiSbF₆, LiAlCl₄, LiClO₄, CF₃SO₃Li, C₄F₉SO₃Li, CF₃COOLi, (CF₃CO)₂NLi, (CF₃SO₂)₂NLi, and (C₂F₅SO₂)NLi. In one embodiment, the supporting electrolyte preferably includes LiPF₆, LiClO₄, and CF₃SO₃Li. Examples of the preferred reason for this include increasing the lithium ion conductivity.

In one embodiment, the non-aqueous electrolytic solution may optionally include a coating film forming agent. One kind of coating film forming agent may be used alone, or two or more kinds thereof may be used in combination.

Examples of the coating film forming agent include a carbonate, an alkene sulfide, a sultone, and an acid anhydride.

Examples of the carbonate include vinylene carbonate, vinylethylene carbonate, vinyl ethyl carbonate, methyl phenyl carbonate, fluoroethylene carbonate, and difluoroethylene carbonate.

Examples of the alkene sulfide include ethylene sulfide and propylene sulfide.

Examples of the sultone include 1,3-propane sultone and 1,4-butane sultone.

Examples of the acid anhydride include maleic acid anhydride and succinic acid anhydride.

In one embodiment, a content in terms of % by mass (coating film forming agent/total electrolytic solution) is preferably 10% by mass or less, more preferably 8% by mass or less, and still more preferably 5% by mass or less, and particularly preferably 2% by mass or less.

Examples of the form (of the power storage device) include a cylinder type in which a sheet electrode and a separator are formed in a spiral shape, a cylinder type of an inside-out structure, in which a pellet electrode and a separator are combined, and a coin type in which a pellet electrode and a separator are laminated.

Examples of the manufacturing method (for the power storage device) include the method described in Japanese Patent Laid-Open No. 2013-089437. A battery can be manufactured by placing a negative electrode on an exterior case, providing an electrolytic solution and a separator thereon, further placing a positive electrode to face the negative electrode, and carrying out fixing with a gasket and a sealing plate.

The usage form (of the power storage devices) is a form of, for example, a battery, a non-aqueous secondary battery, a lithium ion battery, or a sodium ion battery.

### [Examples]

Hereinafter, the present invention will be specifically described through Examples and Comparative Examples. However, the above-described description of the preferred embodiments and Examples below are provided for exemplary purposes only and are not provided for the intended purpose of limiting the scope of the present patent claims. In addition, in each of Examples and Comparative Examples, numerical values in terms of parts, %, and the like are based on mass unless otherwise specified.

### Example (1)-1-1: Manufacturing (of power storage device separator binder aqueous solution)

1,440 g of ion exchange water, 178.0 g (1.80 mol) of dimethyl acrylamide, 50.7 g (0.36 mol) of a 50% acrylamide aqueous solution, 21.6 g (0.24 mol) of 80% acrylic acid, and0.36 g (0.002 mol) of sodium methallyl sulfonate were placed in a reaction apparatus equipped with a stirrer, a thermometer, a reflux condenser, and a nitrogen gas introduction tube, the oxygen in the reaction system was removed by passage of nitrogen gas, and then the temperature was raised to 50°C. 2.2 g of 2,2'-azobis-2-amidinopropane dihydrochloride (manufactured by NIPPOH CHEMICALS CO., LTD., product name "NC-32") and 22 g of ion exchange water were charged thereinto, the temperature was raised to 80°C, and a reaction was carried out for 3 hours. Thereafter, 18.0 g (0.22 mol) of a 48% sodium hydroxide aqueous solution as a neutralizing agent was added and stirred, and ion exchange water was added so that the concentration of solid contents was 13%, whereby a power storage device separator binder aqueous solution was obtained. There was no water-insoluble content of the polymer.

In Example (1)-1 other than Example (1)-1-1, a power storage device separator binder aqueous solution was prepared in the same manner as in Example (1)-1-1, except that the monomer composition in Example (1)-1-1 was changed to a composition shown in the table below.

### Comparative Example (1)-1-1

1,250 g of ion exchange water, 392.0 g (2.76 mol) of a 50% acrylamide aqueous solution, 27.6 g (0.31 mol) of 80% acrylic acid, and 0.46 g (0.003 mol) of sodium methallyl sulfonate were placed in a reaction apparatus equipped with a stirrer, a thermometer, a reflux condenser, and a nitrogen gas introduction tube, the oxygen in the reaction system was removed by passage of nitrogen gas, and then the temperature was raised to 50°C. 2.2 g of 2,2'-azobis-2-amidinopropane dihydrochloride (manufactured by NIPPOH CHEMICALS CO., LTD., product name "NC-32") and 22 g of ion exchange water were charged thereinto, the temperature was raised to 80°C, and a reaction was carried out for 3 hours. Thereafter, 23.0 g (0.28 mol) of a 48% sodium hydroxide aqueous solution as a neutralizing agent was added and stirred, and ion exchange water was added so that the concentration of solid contents was 13%, whereby a power storage device separator binder aqueous solution was obtained.

In Comparative example (1)-1 other than Comparative Example (1)-1-1, a power storage device separator binder aqueous solution was prepared in the same manner as in Comparative Example (1)-1-1, except that the monomer composition in Comparative Example (1)-1-1 was changed to a composition shown in the table below.

**[Table (1)-1]**

| | Constitutional unit derived from N,N-dialkyl (meth)acrylamide | | Constitutional unit derived from (meth)acrylamide | | Constitutional unit derived from unsaturated carboxylic acid and/or salt of unsaturated carboxylic acid | | Constitutional unit derived from another monomer | | | Neutralizing agent (amount with respect to COOH) | | B-type viscosity (mPa·s) | Molecul ar weight (M_{W}) |
|---|---|---|---|---|---|---|---|---|---|---|---|---|---|
| | DMAA | DEAA | AM | MAM | AA | MAA | AN | HEA | SMAS | NaOH | NH 3 | | |
| | (% by mole) | (% by mole) | (% by mole) | (% by mole) | (% by mole) | (% by mole) | (% by mole) | (% by mole) | (% by mole) | (% by mole) | (% by mol e) | | |
| Exampl e (1)-1-1 | 7500 | - | 1490 | - | 1000 | - | - | - | 0.10 | 90 | - | 1,600 | 600,000 |
| Exampl e (1)-1-2 | 50.00 | - | 39.90 | - | 1000 | - | - | - | 0.10 | 90 | - | 1,400 | 510,000 |
| Exampl e (1)-1-3 | 2500 | - | 74.90 | - | - | - | - | - | 0.10 | - | - | 1,800 | 530,000 |
| Exampl e (1)-1-4 | 50.00 | - | 39.90 | - | - | 1000 | - | - | 0.10 | 90 | - | 3,000 | 560,000 |
| Exampl e (1)-1-5 | 25.00 | - | 3990 | - | 3500 | - | - | - | 0.10 | 90 | - | 1,900 | 590,000 |
| Exampl e (1)-1-6 | 40.00 | - | 24.95 | 5.00 | 2000 | - | 1000 | - | 0.05 | 90 | - | 1,100 | 470,000 |
| Exampl e (1)-1-7 | 50.00 | 5.00 | 39.90 | - | 5.00 | - | - | - | 0.10 | 90 | - | 1,800 | 610,000 |
| Exampl e (1)-1-8 | | 2500 | 39.90 | - | 2000 | - | - | 1500 | 0.10 | 90 | - | 2,800 | 530,000 |
| Exampl e (1)-1-9 | 7500 | - | 1490 | - | 1000 | - | - | - | 0.10 | - | 90 | 1,700 | 600,000 |
| Exampl e (1)-1-10 | 40.00 | - | 24.95 | 5.00 | 2000 | - | 1000 | - | 0.05 | - | 90 | 1,200 | 470,000 |
| Compar ative Exampl e (1)-1-1 | - | - | 89.90 | - | 1000 | - | - | - | 0.10 | 90 | - | 3,500 | 530,000 |
| Compar ative Exampl e (1)-1-2 | 25.00 | - | 4.90 | - | 7000 | - | - | - | 0.10 | 90 | - | 3,600 | 610,000 |
| Compar ative Exampl e (1)-1-3 | - | - | 4990 | - | 3000 | - | 2000 | - | - | 80 | - | 8,000 | 600,000 |
| Compar ative Exampl e (1)-1-4 | - | - | 3500 | - | 3500 | - | - | 29.90 | 0.10 | 90 | - | 3,000 | 700,000 |

| | | | | | | | | | | | | | |
|---|---|---|---|---|---|---|---|---|---|---|---|---|---|
| · DMAA: N,N-dimethylacrylamide ("DMAA", manufactured by KJ Chemicals Corporation) · DEAA: N,N-diethylacrylamide · AM: Acrylamide ("50% acrylamide", manufactured by Mitsubishi Chemical Corporation) · MAM: Methacrylamide · AA: Acrylic acid ("80% acrylic acid", manufactured by Osaka Organic Chemical Industry Ltd.) · MAA: Methacrylic acid ("Methacrylic Acid", manufactured by Mitsubishi Chemical Corporation) · AN: Acrylonitrile ("Acrylonitrile", manufactured by Mitsubishi Chemical Corporation) · HEA: 2-hydroxyethyl acrylate ("HEA", manufactured by Osaka Organic Chemical Industry Ltd.) · SMAS: Sodium methallyl sulfonate · NaOH: Sodium hydroxide ("48% sodium hydroxide solution", manufactured by Kanto Chemical Co., Inc.) | | | | | | | | | | | | | |

### Manufacturing Example (2)-1: Manufacturing (of water soluble polymer (2))

1,300 g of ion exchange water, 5.4 g (0.03 mol) of diacetone acrylamide, 447.1 g (3.14 mol) of a 50% acrylamide aqueous solution, and 0.50 g (0.003 mol) of sodium methallyl sulfonate were placed in a reaction apparatus equipped with a stirrer, a thermometer, a reflux condenser, and a nitrogen gas introduction tube, the oxygen in the reaction system was removed by passage of nitrogen gas, and then the temperature was raised to 50°C. 2.3 g of 2,2'-azobis-2-amidinopropane dihydrochloride (manufactured by NIPPOH CHEMICALS CO., LTD., product name "NC-32") and 23 g of ion exchange water were charged thereinto, the temperature was raised to 80°C, and a reaction was carried out for 3 hours. Thereafter, ion exchange water was added so that the concentration of solid contents was 13%, whereby a polymer aqueous solution was obtained. There was no water-insoluble content of the polymer.

In Manufacturing Examples (2)-2 to (2)-3, a polymer aqueous solution was prepared in the same manner as in Manufacturing Example (2)-1, except that the monomer composition in Example (2)-1 described above was changed to a composition shown in the table below.

### Manufacturing Example (2)-4

1,400 g of ion exchange water, 4.3 g (0.03 mol) of diacetone acrylamide, 125.2 g (0.88 mol) of a 50% acrylamide aqueous solution, 135.1 g (1.36 mol) of dimethyl acrylamide, 22.7 g (0.25 mol) of 80% acrylic acid, and 0.40 g (0.003 mol) of sodium methallyl sulfonate were placed in a reaction apparatus equipped with a stirrer, a thermometer, a reflux condenser, and a nitrogen gas introduction tube, the oxygen in the reaction system was removed by passage of nitrogen gas, and then the temperature was raised to 50°C. 2.2 g of 2,2'-azobis-2-amidinopropane dihydrochloride (manufactured by NIPPOH CHEMICALS CO., LTD., product name "NC-32") and 22 g of ion exchange water were charged thereinto, the temperature was raised to 80°C, and a reaction was carried out for 3 hours. Thereafter, 18.9 g (0.23 mol) of a 48% sodium hydroxide aqueous solution as a neutralizing agent was added and stirred, and ion exchange water was added so that the concentration of solid contents was 13%, whereby a polymer aqueous solution was obtained. There was no water-insoluble content of the polymer.

In Manufacturing Examples (2)-5 to (2)-7, a polymer aqueous solution was prepared in the same manner as in Manufacturing Example (2)-4, except that the monomer composition in Manufacturing Example (2)-4 described above was changed to a composition shown in the table below.

### Comparative Manufacturing Example (2)-1

1,290 g of ion exchange water, 458.3 g (3.22 mol) of a 50% acrylamide aqueous solution, and 0.26 g (0.002 mol) of sodium methallyl sulfonate were placed in a reaction apparatus equipped with a stirrer, a thermometer, a reflux condenser, and a nitrogen gas introduction tube, the oxygen in the reaction system was removed by passage of nitrogen gas, and then the temperature was raised to 50°C. 2.3 g of 2,2'-azobis-2-amidinopropane dihydrochloride (manufactured by NIPPOH CHEMICALS CO., LTD., product name "NC-32") and 23 g of ion exchange water were charged thereinto, the temperature was raised to 80°C, and a reaction was carried out for 3 hours. Thereafter, ion exchange water was added so that the concentration of solid contents was 13%, whereby a polymer aqueous solution was obtained. There was no water-insoluble content of the polymer.

In Comparative Manufacturing Example (2)-2, a polymer aqueous solution was prepared in the same manner as in Comparative Manufacturing Example (2)-1, except that the monomer composition in Comparative Manufacturing Example (2)-1 described above was changed to a composition shown in the table below.

### (Comparative Manufacturing Example (2)-3

1,190 g of ion exchange water, 33.2 g (0.20 mol) of diacetone acrylamide, 181.2 g (1.27 mol) of a 50% acrylamide aqueous solution, 88.4 g (0.98 mol) of 80% acrylic acid, and 0.19 g (0.001 mol) of sodium methallyl sulfonate were placed in a reaction apparatus equipped with a stirrer, a thermometer, a reflux condenser, and a nitrogen gas introduction tube, the oxygen in the reaction system was removed by passage of nitrogen gas, and then the temperature was raised to 50°C. 1.9 g of 2,2'-azobis-2-amidinopropane dihydrochloride (manufactured by NIPPOH CHEMICALS CO., LTD., product name "NC-32") and 19 g of ion exchange water were charged thereinto, the temperature was raised to 80°C, and a reaction was carried out for 3 hours. Thereafter, 73.6 g (0.88 mol) of a 48% sodium hydroxide aqueous solution as a neutralizing agent was added and stirred, and ion exchange water was added so that the concentration of solid contents was 13%, whereby a polymer aqueous solution was obtained. There was no water-insoluble content of the polymer.

**[Table (2)-1]**

| | Constituti onal unit derived from keto group-con taining ethylenica lly unsaturate d monomer | Constitutional unit derived from (meth)acrylamide group-containing compound | | Constitutional unit derived from unsaturated carboxylic acid and/or salt of unsaturated carboxylic acid | | Constitutional unit derived from another component | | | Neutralizing agent (amount with respect to COOH) | | B-type viscosity (mPa·s) | Molecul ar weight (Mw) |
|---|---|---|---|---|---|---|---|---|---|---|---|---|
| | DAAM | AM | DMA A | AA | MAA | AN | HEA | SMA S | NaOH | NH3 | | |
| | (% by mole) | (% by mole) | (% by mole) | (% by mole) | (% by mole) | (% by mole) | (% by mole) | (% by mole) | (% by mole) | (% by mole) | | |
| Manufacturing Example (2)-1 | 1.00 | 9890 | - | - | - | - | - | 0.10 | - | - | 3,100 | 470,000 |
| Manufacturing Example (2)-2 | 0.25 | 9965 | - | - | - | - | - | 0.10 | - | - | 3,900 | 470,000 |
| Manufacturing Example (2)-3 | 8.00 | 91.70 | - | - | - | - | - | 0.30 | - | - | 600 | 310,000 |
| Manufacturing Example (2)-4 | 1.00 | 34.90 | 54.00 | 1000 | - | - | - | 0.10 | 90 | - | 1,200 | 500,000 |
| Manufacturing Example (2)-5 | 1.00 | 8890 | - | - | 1000 | - | - | 0.10 | 90 | - | 3,400 | 520,000 |
| Manufacturing Example (2)-6 | 1.00 | 6895 | - | 2000 | - | 1000 | - | 0.05 | 90 | - | 3,200 | 490,000 |
| Manufacturing Example (2)-7 | 1.00 | 83.90 | - | 1000 | - | - | 5.00 | 0.10 | 90 | - | 4,200 | 570,000 |
| Manufacturing Example (2)-8 | 1.00 | 6895 | - | 2000 | - | 1000 | - | 0.05 | - | 90 | 3,300 | 490,000 |
| Manufacturing Example (2)-9 | 1.00 | 83.90 | - | 1000 | - | - | 5.00 | 0.10 | - | 90 | 4,100 | 570,000 |
| Comparative Manufacturing Example (2)-1 | - | 99.95 | - | - | - | - | - | 0.05 | - | - | 20,000 | 610,000 |
| Comparative Manufacturing Example (2)-2 | 1200 | 87.95 | - | - | - | - | - | 0.05 | - | - | 18,200 | 600,000 |
| Comparative Manufacturing Example (2)-3 | 8.00 | 51.95 | - | 40.00 | - | - | - | 0.05 | 90 | - | 16,800 | 600,000 |

| | | | | | | | | | | | | |
|---|---|---|---|---|---|---|---|---|---|---|---|---|
| · DAAM: Diacetone acrylamide · AM: Acrylamide ("50% acrylamide", manufactured by Mitsubishi Chemical Corporation) · DMAA: N,N-dimethylacrylamide ("DMAA", manufactured by KJ Chemicals Corporation) · AA: Acrylic acid ("80% acrylic acid", manufactured by Osaka Organic Chemical Industry Ltd.) · MAA: Methacrylic acid ("Methacrylic Acid", manufactured by Mitsubishi Chemical Corporation) · AN: Acrylonitrile ("Acrylonitrile", manufactured by Mitsubishi Chemical Corporation) · HEA: 2-hydroxyethyl acrylate ("HEA", manufactured by Osaka Organic Chemical Industry Ltd.) · SMAS: Sodium methallyl sulfonate · NaOH: Sodium hydroxide ("48% sodium hydroxide solution", manufactured by Kanto Chemical Co., Inc.) | | | | | | | | | | | | |

### Example (2)-1-1: Manufacturing (of power storage device separator binder aqueous solution)

100 parts by mass of the water soluble polymer (2) obtained in Manufacturing Example (2)-1 in terms of solid contents, and 0.50 parts by mass of adipic acid dihydrazide were mixed at 25°C for 0.5 hours to obtain a uniform power storage device separator binder aqueous solution. The viscosity of the obtained power storage device separator binder aqueous solution was measured with a B-type viscometer.

In Example (2)-1 other than Example (2)-1-1, and Comparative Example (2)-1, a power storage device separator binder aqueous solution was manufactured in the same manner as in Example (2)-1, except that the composition was changed as shown in the table below, and then the viscosity was measured with a B-type viscometer.

**[Table (2)-2]**

| | Water soluble polymer | | Hydrazide | | B-type viscosity (mPa·s) |
|---|---|---|---|---|---|
| | Name | Parts by mass | Name | Parts by mass | |
| Example (2)-1-1 | Manufacturing Example (2)-1 | 100.00 | ADH | 0.50 | 3,300 |
| Example (2)-1-2 | Manufacturing Example (2)-1 | 100.00 | ADH | 1.15 | 3,400 |
| Example (2)-1-3 | Manufacturing Example (2)-2 | 100.00 | ADH | 0.30 | 4,000 |
| Example (2)-1-4 | Manufacturing Example (2)-3 | 100.00 | ADH | 1.80 | 2,700 |
| Example (2)-1-5 | Manufacturing Example (2)-4 | 100.00 | ADH | 0.50 | 2,800 |
| Example (2)-1-6 | Manufacturing Example (2)-5 | 100.00 | ADH | 0.50 | 4,400 |
| Example (2)-1-7 | Manufacturing Example (2)-6 | 100.00 | SDH | 0.50 | 4,600 |
| Example (2)-1-8 | Manufacturing Example (2)-7 | 100.00 | ADH | 0.50 | 5,300 |
| Example (2)-1-9 | Manufacturing Example (2)-8 | 100.00 | ADH | 0.50 | 4,500 |
| Example (2)-1-10 | Manufacturing Example (2)-9 | 100.00 | ADH | 0.50 | 5,500 |
| Comparative Example (2)-1-1 | Manufacturing Example (2)-1 | 100.00 | - | - | 3,100 |
| Comparative Example (2)-1-2 | Comparative Manufacturing Example 124-1 | 100.00 | ADH | 1.00 | 20,000 |
| Comparative Example (2)-1-3 | Comparative Manufacturing Example (2)-2 | 100.00 | ADH | 2.55 | Gelated |
| Comparative Example (2)-1-4 | Comparative Manufacturing Example (2)-3 | 100.00 | ADH | 1.65 | Gelated |

| | | | | | |
|---|---|---|---|---|---|
| . ADH: Adipic acid dihydrazide · SDH: Succinic acid dihydrazide | | | | | |

The measurement conditions (for the B type viscosity) are as follows.
Concentration of solid contents: 15% by mass
Measurement temperature: 25°C

In a case of a viscosity of 100,000 to 20,000 mPa·s, a No. 4 rotor is used, and a rotation speed is 6 rpm.

In a case of a viscosity of less than 20,000 mPa s, a No. 3 rotor is used, and a rotation speed is 6 rpm.

The measurement conditions (for the weight average molecular weight) are as follows.
· Measuring instrument: Manufactured by Tosoh Corporation, GPC (model number: HLC-8220)
· Column: TSKgel G2500PW_{XL} (manufactured by Tosoh Corporation), TSKgel G4000 (manufactured by Tosoh Corporation), and SHODEX SB-806M-HQ (manufactured by Showa Denko K.K.)
· Eluent: 0.2 M phosphate buffer solution/acetonitrile solution (90/10, PH: 8.0)
· Column temperature: 40°C
· Calibration curve: Standard polyethylene oxide-polyethylene glycol
· Measurement method: The water soluble polymer is dissolved in the eluent so that the concentration thereof is 0.10% by mass, and measurement is carried out after filtration with a filter.

### Manufacturing (of power storage device separator slurry and separator) and evaluation (of power storage device)

### Example (1)-2-1: (1) Manufacturing (of power storage device separator slurry)

5 parts by mass of the power storage device separator binder aqueous solution obtained in Example 1-1 in terms of solid contents, 113 parts by mass of water were stirred and mixed, and 100 parts by mass of boehmite (average particle diameter: 0.8 µm) as non-conductive particles were added thereto, and the resultant mixture was dispersed and stirred at 15,000 rpm for 60 minutes with a homogenizer (T25 digital ULTRA-TURRAX, manufactured by IKA). Further, ion exchange water was added thereto to adjust the viscosity, whereby a power storage device separator slurry was manufactured.

### (2) Manufacturing (of separator): Lamination of layer (coating layer) of slurry for separator

A single-layer polyethylene separator base material (PE base material) having a width of 250 mm, a length of 200 mm, and a thickness of 6 µm, which had been manufactured according to a wet type method, was prepared. The power storage device separator slurry was applied onto one surface of the separator using a gravure coater so that the thickness was 3.0 mm after drying, and then drying was carried out to obtain a power storage device separator.

In Example (1)-2 other than Example (1)-2-1, and in Example (2)-2, Comparative Example (1)-2, and Comparative Example (2)-2, a power storage device separator was obtained by the same operation as in Example (1)-2-1 unless otherwise stated, except that the composition was changed as shown in the table below.

### Example (1)-2-9

A power storage device separator was obtained by the same operation as in Example (1)-2-2, except that in Example (1)-2-2, a polyethylene terephthalate nonwoven fabric base material (PET base material), which had a width of 200 mm, a length of 200 mm, a thickness of 9 µm, and an areal weight of 11 g/m², was coated with the power storage device separator slurry.

### Example (1)-2-10

A power storage device separator was obtained by the same operation as in Example (1)-2-4, except that in Example (1)-2-4, a three-layer (made of polypropylene/polyethylene/polypropylene) separator base material (PP/PE/PP base material) having a width of 250 mm, a length of 200 mm, and a thickness of 20 µm, which had been manufactured according to a dry type method, was coated with the power storage device separator slurry.

### Example (2)-2-9

A power storage device separator was obtained by the same operation as in Example (2)-2-2, except that in Example (2)-2-2, a polyethylene terephthalate nonwoven fabric base material (PET base material), which had a width of 200 mm, a length of 200 mm, a thickness of 9 µm, and an areal weight of 11 g/m², was coated with the power storage device separator slurry.

### Example (2)-2-10

A power storage device separator was obtained by the same operation as in Example (2)-2-2, except that in Example (2)-2-2, a three-layer (made of polypropylene/polyethylene/polypropylene) separator base material (PP/PE/PP base material) having a width of 250 mm, a length of 200 mm, and a thickness of 20 µm, which had been manufactured according to a dry type method, was coated with the power storage device separator slurry.

### <Thermal shrinkage resistance>

Each of the separators obtained in Example (2)-2 and Comparative Example (2)-2 was cut into a square with a width of 12 cm and a length of 12 cm, and another square with a side of 10 cm was drawn in the inside of the square to prepare test pieces. The test piece was subjected to a heating treatment by being placed in a constant temperature bath at 150°C and being allowed to stand for 1 hour. After the heat treatment, the area of the square drawn in the inside was measured, a change in area before and after the heating treatment was determined as the thermal shrinkage rate, and the heat resistance was evaluated according to the following criteria. It is indicated that the smaller the thermal shrinkage rate is, the more excellent the thermal shrinkage resistance of the separator is.
o: Area shrinkage rate is less than 1%.
Δ: Area shrinkage rate is 1% or more and less than 3%.
×: Area shrinkage rate is 3% or more.

### <Binding properties of non-conductive particles>

The obtained separator was cut into a square of 10 cm x 10 cm, a mass (X0) was accurately weighed, one thereof was attached and fixed on a cardboard, and then a 900 g weight having a diameter of 5 cm, which was covered with cotton cloth, was placed on the ceramic layer side, followed by being rubbed mutually at a rotation speed of 50 rpm for 10 minutes. Thereafter, a mass (X1) was accurately measured again, and the amount of powder falling (in terms of % by mass) was calculated according to the following expression, amount of powder falling = {(X0 - X1)/X0} × 100, whereby the binding properties of non-conductive particles of the separator were evaluated according to the following criteria.
A: The amount of powder falling is less than 2% by mass.
B: The amount of powder falling is 2% by mass or more and less than 5% by mass.
C: The amount of powder falling is 5% by mass or more.

It is indicated that the smaller the amount of powder falling is, the higher the binding properties of non-conductive particles are.

### <Separator adherence (peel strength)>

A test piece having a width of 2 cm and a length of 10 cm is cut out from the obtained separator and fixed with a coated side facing up. Next, an adhesive tape having a width of 15 mm ("Cello Tape (registered trademark)", manufactured by Nichiban Co., Ltd.) (specified in JIS Z1522) was attached to the surface of the ceramic layer of the test piece while being pressed, and then a stress in a case where the adhesive tape was peeled off from one end of the test piece in a 180° direction at a speed of 30 mm/min was measured using a tensile tester ("Tensilon RTM-100", manufactured by A&D Company, Limited) under a condition of 25°C. The measurement was carried out five times, the measured strains were converted into a value per 15 mm width, and the average value was calculated as the peel strength. The higher the peel strength, the higher the adhesion strength between the base material and the ceramic layer or the higher the binding properties between the ceramic layers, which indicates that the ceramic layer or the ceramic layers are not easily peeled off from the separator base material.

### (3) Manufacturing (of power storage device)

For measuring rate tolerance and output characteristics, a power storage device was manufactured as follows.

### (3-1) Manufacturing (of negative electrode)

Using a commercially available rotating and revolving mixer (product name "Awatori Rentaro", manufactured by THINKY CORPORATION), 2 parts of an aqueous solution of styrene-butadiene rubber (SBR)/carboxymethylcellulose (CMC) (mass ratio: 1/1) in terms of solid contents and 98 parts of natural graphite (manufactured by Ito Graphite Co., Ltd., product name "Z-5F") were mixed in a container dedicated to the mixer. Ion exchange water was added thereto so that the concentration of solid contents was 40%, and then the container was set in the mixer. Next, after kneading for 10 minutes at 2,000 rpm, defoaming was carried out for 1 minute to obtain a slurry for a negative electrode of a power storage device. The slurry for a negative electrode of a power storage device was placed on a collector made of a copper foil to be applied in a film shape by using a doctor blade. The collector coated with the slurry for a negative electrode of a power storage device was dried at 80°C for 20 minutes to volatilize and remove water and then tightly attached and bonded using a roll press machine. In this case, the density of the electrode active material layer was set to be 1.0 g/cm². The bonded product was heated in a vacuum dryer at 120°C for 2 hours and cut into a predetermined shape (a rectangular shape of 26 mm × 31 mm) to obtain a negative electrode in which the thickness of the electrode active material layer was 15 µm.

### (3-2) Manufacturing (of positive electrode)

88 parts by mass, 6 parts by mass, and 6 parts by mass of LiNi_{0.5}Co_{0.2}Mn_{0.3}O₂ as a positive electrode active material, acetylene black as a conductive auxiliary agent, and polyvinylidene fluoride (PVDF) as a binder, respectively, were mixed, and this mixture was dispersed in an appropriate amount of N-methyl-2-pyrrolidone (NMP) to manufacture a slurry for a positive electrode of a power storage device. Next, an aluminum foil was prepared as a collector for the positive electrode, and the slurry for a positive electrode of a power storage device was placed on the aluminum foil to be applied in a film shape by using a doctor blade. The aluminum foil that had been coated with the slurry for a positive electrode of a power storage device was dried at 80°C for 20 minutes to volatilize and remove NMP and then tightly attached and bonded using a roll press machine. In this case, the density of the positive electrode active material layer was set to be 3.2 g/cm². The bonded product was heated in a vacuum dryer at 120°C for 6 hours and cut into a predetermined shape (a rectangular shape of 25 mm × 30 mm) to obtain a positive electrode in which the thickness of the positive electrode active material layer was about 45 µm.

### (3-3) Manufacturing (of power storage device)

A power storage device was manufactured using the above-described negative electrode and positive electrode. Specifically, each of the separators obtained in Examples and Comparative Examples was sandwiched between the positive electrode and the negative electrode, with a rectangular sheet (27 × 32 mm, thickness: 25 µm), to form an electrode plate group. After covering this electrode plate group with a set of two laminate films and sealing three sides thereof, an electrolytic solution was injected into a bag-pouch laminate film. As an electrolytic solution, a solution obtained by dissolving LiPF₆ at a concentration of 1 mol/L in a solvent of ethylene carbonate/ethyl methyl carbonate = 1/1 (mass ratio) was used. Thereafter, the remaining one side was sealed to obtain a power storage device in which the four sides were airtightly sealed and the electrode plate group and the electrolytic solution were sealed. Here, the positive electrode and the negative electrode each include a tab that is capable of being electrically connected to the outside, where a part of this tab extends to the outside of the power storage device. As a result of allowing the power storage device manufactured through the above steps to be energized, no operational problems occurred.

### <Rate tolerance and output characteristics>

Using the power storage device manufactured above, charging was carried out at 25°C and 0.1 C at a voltage of 2.5 to 4.2 V. At a time point at which the voltage reached 4.2 V, the charging was uninterruptedly continued at a constant voltage (4.2 V), and a time point at which the current value reached 0.01 C was set as the completion of charging (cutoff). Next, charging and discharging of carrying out discharging up to 2.5 V at 0.1 C was repeated 5 times. Only discharging was changed to 1 C at the 6th cycle and the following cycles, and charging and discharging was repeated 50 cycles. A value obtained by calculating the rate of the 1 C discharge capacity at the 6th cycle relative to the charge capacity at the 6th cycle, in terms of percentage, was defined as the initial rate retention rate. The larger this value is, the more favorable the rate tolerance is. Further, a value obtained by calculating the rate of the 50 C discharge capacity at the 50th cycle with respect to the 1 C discharge capacity at the 5th cycle, in terms of percentage, was defined as the capacity retention rate. The larger this value is, the more favorable the output characteristics are.

**[Table (1)-2]**

| Separator | Aqueous solution | Base material | Binding properties of non-conductive particles | Adherence (N/m) | Rate tolerance | Output characteristics |
|---|---|---|---|---|---|---|
| | | | | | 6 cycles | 50 cycles |
| Example (1)-2-1 | Example (1)-1-1 | PE | A | 56 | 98 | 93 |
| Example (1)-2-2 | Example (1)-1-2 | PE | A | 51 | 99 | 94 |
| Example (1)-2-3 | Example (1)-1-3 | PE | A | 44 | 97 | 93 |
| Example (1)-2-4 | Example (1)-1-4 | PE | A | 53 | 99 | 94 |
| Example (1)-2-5 | Example (1)-1-5 | PE | A | 47 | 98 | 92 |
| Example (1)-2-6 | Example (1)-1-6 | PE | A | 54 | 98 | 91 |
| Example (1)-2-7 | Example (1)-1-7 | PE | A | 55 | 98 | 93 |
| Example (1)-2-8 | Example (1)-1-8 | PE | A | 49 | 97 | 93 |
| Example (1)-2-9 | Example (1)-1-2 | PET nonwoven fabric | A | 48 | 99 | 94 |
| Example (1)-2-10 | Example (1)-1-4 | Three layers (PP/PE/PP) | A | 52 | 98 | 92 |
| Example (1)-2-11 | Example (1)-1-9 | PE | A | 70 | 98 | 91 |
| Example (1)-2-12 | Example (1)-1-10 | PE | A | 65 | 98 | 92 |
| Comparative Example (1)-2-1 | Comparative Example (1)-1-1 | PE | B | 13 | 95 | 89 |
| Comparative Example (1)-2-2 | Comparative Example (1)-1-2 | PE | C | 14 | 97 | 87 |
| Comparative Example (1)-2-3 | Comparative Example (1)-1-3 | PE | C | 19 | 97 | 86 |
| Comparative Example (1)-2-4 | Comparative Example (1)-1-4 | PE | C | 17 | 96 | 86 |

**[Table (2)-3]**

| Separator | Binder Aqueous solution | Base material | Thermal shrinkage resistance | Binding properties of non-conductive particles | Adherence (N/m) | Rate tolerance | Output characteristics |
|---|---|---|---|---|---|---|---|
| | | | | | | 6 cycles | 50 cycles |
| Example (2)-2-1 | Example (2)-1-1 | PE | ○ | A | 40 | 97 | 93 |
| Example (2)-2-2 | Example (2)-1-2 | PE | ○ | A | 41 | 98 | 93 |
| Example (2)-2-3 | Example (2)-1-3 | PE | ○ | A | 38 | 98 | 91 |
| Example (2)-2-4 | Example (2)-1-4 | PE | ○ | A | 45 | 98 | 92 |
| Example (2)-2-5 | Example (2)-1-5 | PE | ○ | A | 61 | 99 | 92 |
| Example (2)-2-6 | Example (2)-1-6 | PE | ○ | A | 42 | 98 | 93 |
| Example (2)-2-7 | Example (2)-1-7 | PE | ○ | A | 42 | 98 | 94 |
| Example (2)-2-8 | Example (2)-1-8 | PE | ○ | A | 40 | 97 | 91 |
| Example (2)-2-9 | Example (2)-1-2 | PET nonwoven fabric | ○ | A | 40 | 98 | 92 |
| Example (2)-2-10 | Example (2)-1-2 | Three layers (PP/PE/PP) | ○ | A | 39 | 97 | 92 |
| Example (2)-2-11 | Example (2)-1-9 | PE | ○ | A | 55 | 98 | 92 |
| Example (2)-2-12 | Example (2)-1-10 | PE | ○ | A | 50 | 98 | 91 |
| Comparative Example (2)-2-1 | Comparative Example (2)-1-1 | PE | × | C | 11 | 97 | 84 |
| Comparative Example (2)-2-2 | Comparative Example (2)-1-2 | PE | × | C | 7 | 96 | 86 |
| Comparative Example (2)-2-3 | Comparative Example (2)-1-3 | PE | Unmeasurable | Unmeasurable | Unmeasurable | Unmeasurable | Unmeasurable |
| Comparative Example (2)-2-4 | Comparative Example (2)-1-4 | PE | Unmeasurable | Unmeasurable | Unmeasurable | Unmeasurable | Unmeasurable |

## Claims

1. A power storage device separator binder aqueous solution,
wherein the power storage device separator binder aqueous solution contains a water soluble polymer (1) or contains a water soluble polymer (2) and a hydrazide,
the water soluble polymer (1) contains 20% by mole to 80% by mole of an N,N-dialkyl (meth)acrylamide unit and 10% by mole to 80% by mole of a (meth)acrylamide unit,
the water soluble polymer (2) contains 0.2% by mole to 10% by mole of a keto group-containing ethylenically unsaturated monomer unit and 65% by mole to 99.7% by mole of a (meth)acrylamide group-containing compound unit, and
the hydrazide has two or more hydrazide groups.

2. The power storage device separator binder aqueous solution according to Claim 1,
wherein the water soluble polymer (1) contains less than 40% by mole of an unsaturated carboxylic acid unit and/or a unit of a salt of the unsaturated carboxylic acid.

3. The power storage device separator binder aqueous solution according to Claim 1,
wherein the water soluble polymer (2) contains less than 30% by mole of an unsaturated carboxylic acid unit and/or a unit of a salt of the unsaturated carboxylic acid.

4. A power storage device separator slurry,
wherein the power storage device separator slurry contains a water soluble polymer (1), water, and non-conductive particles, or contains a water soluble polymer (2), a hydrazide, water, and non-conductive particles,
the water soluble polymer (1) contains 20% by mole to 80% by mole of an N,N-dialkyl (meth)acrylamide unit and 10% by mole to 80% by mole of a (meth)acrylamide unit,
the water soluble polymer (2) contains 0.2% by mole to 10% by mole of a keto group-containing ethylenically unsaturated monomer unit and 65% by mole to 99.7% by mole of a (meth)acrylamide group-containing compound unit, and
the hydrazide has two or more hydrazide groups.

5. A power storage device separator comprising:
a dried product of the power storage device separator slurry according to Claim 4, on a base material.

6. A power storage device separator/electrode laminate comprising:
a dried product of the power storage device separator slurry according to Claim 4, on an active material side of an electrode.

7. A power storage device comprising:
the power storage device separator according to Claim 5; and/or
the power storage device separator/electrode laminate according to Claim 6.
